(19) Europäisches Patentamt
European Patent Office
Office européen des brevets

(11) **EP 3 780 595 A1**

# EUROPEAN PATENT APPLICATION
published in accordance with Art. 153(4) EPC

(43) Date of publication:
**17.02.2021 Bulletin 2021/07**

(21) Application number: **18914057.7**

(22) Date of filing: **02.08.2018**

(51) Int Cl.:
*H04N 13/117* (2018.01)   *H04N 13/178* (2018.01)
*H04N 13/194* (2018.01)   *H04N 13/268* (2018.01)
*H04N 21/236* (2011.01)   *H04N 21/81* (2011.01)
*H04N 21/858* (2011.01)

(86) International application number:
**PCT/KR2018/008805**

(87) International publication number:
**WO 2019/198883 (17.10.2019 Gazette 2019/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.04.2018 US 201862656303 P**

(71) Applicant: **LG Electronics Inc.
Yeongdeungpo-gu
Seoul 07336 (KR)**

(72) Inventors:
• **LEE, Sooyeon
  Seoul 06772 (KR)**
• **OH, Sejin
  Seoul 06772 (KR)**

(74) Representative: **Plasseraud IP
66, rue de la Chaussée d'Antin
75440 Paris Cedex 09 (FR)**

(54) **METHOD AND DEVICE FOR TRANSMITTING 360-DEGREE VIDEO BY USING METADATA RELATED TO HOTSPOT AND ROI**

(57)   A method by which a 360-degree video reception device processes 360-degree video data, according to the present invention, comprises the steps of: acquiring information on pictures of 360-degree videos at a plurality of view points and metadata on the 360-degree videos; decoding the pictures on the basis of the metadata and the information on the pictures and deriving an image for a first view point of a user; deriving a region of interest (ROI) for the first view point and a second view point on the basis of the metadata; and processing the image and the ROI on the basis of the metadata so as to render same by using a 3D space with the first view point as the center thereof, wherein the metadata includes information on a hotspot of the first view point and information on the ROI.

FIG. 12

EP 3 780 595 A1

**Description**

[Technical Field]

The present disclosure relates to a 360-degree video, and more particularly, to a method and apparatus for transmitting and receiving a 360-degree video using a hotspot and ROI-related metadata.

[Background Art]

A virtual reality (VR) system allows a user to experience an electronically projected environment. The system for providing VR content may be further improved to provide higher quality images and stereophonic sound. The VR system may allow a user to interactively consume VR content.

3DoF+ (three degrees of freedom+) content allows users to have more diverse sensory experiences through 360-degree videos of multiple viewpoints by providing 3DoF or 360-degree videos that are newly created according to inter-position movement of the user.

[Disclosure]

[Technical Problem]

An object of the present disclosure is to provide a method and device for increasing the efficiency of 360-degree video data transmission for providing a 3DoF+ system.

Another object of the present disclosure is to provide a method and apparatus for transmitting metadata related to a hotspot indicating a link between 360-degree videos of viewpoints.

Another object of the present disclosure is to provide a method and apparatus for transmitting metadata about a region of interest (ROI) representing an object included in 360-degree videos of multiple viewpoints in common.

Another object of the present disclosure is to provide a method and apparatus for transmitting metadata about an ROI representing an object whose position and shape are changed over time in a 360-degree video.

[Technical Solution]

In one aspect of the present disclosure, provided herein is a method for processing 360-degree video data by a 360-degree video transmission apparatus. The method may include acquiring 360-degree videos for a plurality of viewpoints by at least one camera, processing the 360-degree videos and acquiring pictures for the viewpoints, generating an ROI for a first viewpoint and a second viewpoint, generating metadata about the 360-degree videos, encoding the pictures, and performing processing for storage or transmission on the encoded pictures and the metadata, wherein the metadata may contain information about a hotspot of the first viewpoint and information about the ROI.

In another aspect of the present disclosure, provided herein is a 360-degree video transmission apparatus for processing 360-degree video data. The 360-degree video transmission apparatus may include a data input unit configured to acquire 360-degree videos for a plurality of viewpoints by at least one camera, a projection processor configured to processing the 360-degree videos and acquire pictures for the viewpoints, a metadata processor configured to generate an ROI for a first viewpoint and a second viewpoint and generate metadata about the 360-degree videos, a data encoder configured to encode the pictures, and a transmission processor configured to perform processing for storage or transmission on the encoded pictures and the metadata, wherein the metadata may contain information about a hotspot of the first viewpoint and information about the ROI.

In another aspect of the present disclosure, provided herein is a method for processing 360-degree video data by a 360-degree video reception apparatus. The method may include acquiring information about pictures of 360-degree videos at a plurality of viewpoints and metadata about the 360-degree videos, decoding the pictures based on the metadata and the information about the pictures, deriving an image for a first viewpoint of a user, deriving a Region of Interest (ROI) for the first viewpoint and a second viewpoint based on the metadata, and processing the image and the ROI based on the metadata and rendering the same in a 3D space centered on the first viewpoint, wherein the metadata contains information about a hotspot of the first viewpoint and information about the ROI.

In another aspect of the present disclosure, provided herein is a 360-degree video reception apparatus for processing 360-degree video data. The 360-degree video reception apparatus may include a receiver and a reception processor configured to acquire information about pictures of 360-degree videos at a plurality of viewpoints and metadata about the 360-degree videos, a data decoder configured to decode the pictures based on the metadata and the information about the pictures, derive an image for a first viewpoint of a user, and derive a Region of Interest (ROI) for the first viewpoint and a second viewpoint based on the metadata, and a renderer configured to process the image and the ROI based on the metadata and render the same in a 3D space centered on the first viewpoint, wherein the metadata contains information about a hotspot of the first viewpoint and information about the ROI.

[Advantageous Effects]

According to the present disclosure, 3DoF+ content may be efficiently transmitted in an environment that supports next-generation hybrid broadcasting provided using a terrestrial broadcasting network and the Internet network.

According to the present disclosure, a user may be provided with an interactive experience in consuming 3DoF+ content.

According to the present disclosure, when a user consumes 3DoF+ content, signaling may be performed such that a 3DoF+ content producer's intention is accurately reflected.

According to the present disclosure, in delivering 3DoF+ content, a transmission capacity may be efficiently increased and necessary information may be delivered.

According to the present disclosure described above, by signaling information related to a hotspot that is a link between viewpoints, a 360-degree video that should be provided according to a user's movement between locations may be transmitted and rendered. Accordingly, 3DoF+ content may be more efficiently provided.

According to the present disclosure, as information about a shared ROI designated for an object included in 360-degree videos of multiple viewpoints is signaled, 3DoF+ content may be more efficiently provided.

According to the present disclosure, information about a dynamic ROI designated for an object whose position and shape change over time may be signaled to provide the user with content according to the movement of the object within the ROI. Accordingly, what is intended by a 3DoF+ content producer may be provided more efficiently.

[Description of Drawings]

FIG. 1 is a diagram showing an overall architecture for providing 360-degree video according to the present disclosure.

FIGS. 2 and 3 illustrate the structure of a media file according to an embodiment of the present disclosure.

FIG. 4 illustrates an example of the overall operation of a DASH-based adaptive streaming model.

FIG. 5 exemplarily shows the 3DoF+ VR system.

FIG. 6 is a diagram showing an overall architecture for providing 3DoF+ video according to the present disclosure.

FIGS. 7A and 7B exemplarily show an overall architecture for provision of a 360-degree video performed through a 360-degree video transmission apparatus/360-degree video reception apparatus.

FIG. 8 exemplarily shows a FLUS architecture divided into a source and a sink in Framework for Live Uplink Streaming (FLUS).

FIG. 9 is a diagram schematically illustrating a configuration of a 360 video transmission apparatus to which the present disclosure is applicable.

FIG. 10 is a diagram schematically illustrating a configuration of a 360 video reception apparatus to which the present disclosure is applicable.

FIG. 11 exemplarily illustrates 360-degree videos connected through a hotspot and a shared ROI for the 360 videos.

FIG. 12 exemplarily illustrates 360-degree videos connected through a hotspot and a shared ROI for the 360 videos.

FIG. 13 exemplarily illustrates 360-degree videos connected through hotspots and a shared ROI for the 360 videos.

FIG. 14 exemplarily illustrates an operation of a 360-degree video reception apparatus for processing a 360-degree video including the shared ROI and hotspots.

FIG. 15 shows an example of a dynamic ROI set in 3DoF+ content.

FIG. 16 illustrates an operation of a 360-degree video reception apparatus for processing a 360-degree video including the dynamic ROI and the hotspot.

FIG. 17 illustrates an example of configuring a display screen of a 360-degree video by a 360-degree video reception apparatus using hotspot information and ROI information.

FIG. 18 exemplarily shows a display screen of a 360-degree video constructed using hotspot information and ROI information.

FIGS. 19A to 19F exemplarily illustrate operations by buttons for hotspot information and ROI information.

FIG. 20 schematically illustrates a method of processing 360-degree video data by a 360-degree video transmission apparatus according to the present disclosure.

FIG. 21 schematically illustrates a method of processing 360-degree video data by a 360-degree video reception apparatus according to the present disclosure.

[Mode]

The present disclosure may be subjected to various changes and may have various embodiments, and specific embodiments will be described in detail with reference to the accompanying drawings. However, this is not intended to limit the disclosure to the specific embodiments. Terms used in this specification are merely adopted to explain specific embodiments, and are not intended to limit the technical spirit of the present disclosure. A singular expression includes a plural expression unless the context clearly indicates otherwise. In In this specification, the term "include" or "have" is intended to indicate that characteristics, figures, steps, operations, constituents, and components disclosed in the specification or combinations thereof exist, and should be understood as not precluding the existence or addition of one or more other characteristics, figures, steps, operations, constituents, components, or combinations thereof.

Though individual elements described in the present disclosure are independently shown in the drawings for convenience of description of different functions, this does not mean that the elements are implemented in hardware or software elements separate from each other. For example, two or more of the elements may be combined to form one element, or one element may be divided into a plurality of elements. Embodiments in which respective elements are integrated and/or separated are also within the scope of the present disclosure without departing from the essence of the present disclosure.

Hereinafter, exemplary embodiments of the present disclosure will be described in detail with reference to the accompanying drawings. The same reference numerals will be used for the same components in the drawings, and redundant descriptions of the same components are omitted.

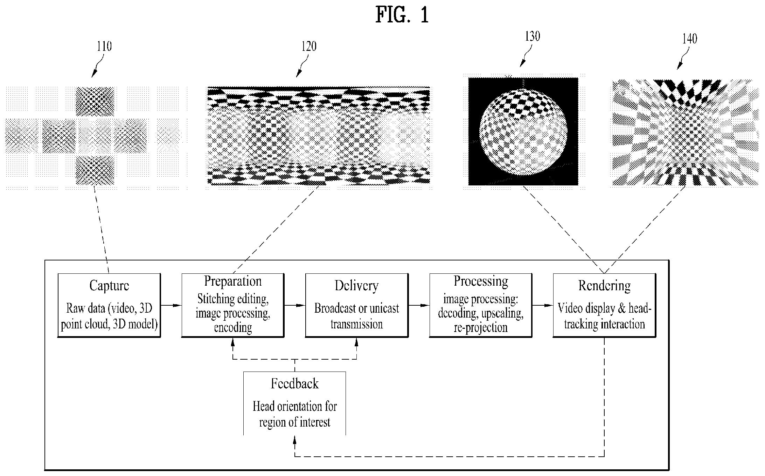

FIG. 1 is a diagram showing an overall architecture for providing 360-degree video according to the present disclosure.

The present disclosure proposes a method of providing 360 content to provide virtual reality (VR) to users. Here, the 360-degree content may be referred to as three Degrees of Freedom (3DoF) content, and VR may refer to a technique or an environment for replicating a real or virtual environment. VR may artificially provide sensuous experiences to users and thus users may experience electronically projected environments therethrough.

360 content may refer to all content for realizing and providing VR, and may include 360-degree video and/or 360 audio. 360-degree video may refer to video or image content which is needed to provide VR and is captured or played in all directions (360 degrees) at the same time. Hereinafter, a 360-degree video may refer to 360-degree video content. A 360-degree video may refer to a video or an image presented in various types of 3D space according to a 3D model. For example, 360-degree video may be presented on a spherical surface. 360 audio may be audio content for providing VR and may refer to spatial audio content which may make an audio generation source recognized as being located in a specific 3D space. 360 content may be generated, processed and transmitted to users, and the users may consume VR experiences using the 360 content.

In particular, the present disclosure proposes a method for effectively providing 360-degree video. To provide 360-degree video, a 360-degree video may be captured first using one or more cameras. The captured 360-degree video may be transmitted through a series of processes, and the data received on the receiving side may be processed into the original 360-degree video and rendered. Then, the 360-degree video may be provided to a user.

Specifically, the entire processes for providing 360-degree video may include a capture process, a preparation process, a transmission process, a processing process, a rendering process and/or a feedback process.

The capture process may refer to a process of capturing images or videos for multiple directions through one or more cameras. Image/video data as shown in part 110 of FIG. 1 may be generated through the capture process. Each plane in part 110 of FIG. 1 may refer to an image/video for each viewpoint. The captured images/videos may be called raw data. In the capture process, metadata related to capture may be generated.

A special camera for VR may be used for capture. According to an embodiment, when a 360-degree video for a virtual space generated using a computer is to be provided, the capture operation using an actual camera may not be performed. In this case, the capture process may be replaced by a process of simply generating related data.

The preparation process may be a process of processing the captured images/videos and the metadata generated in the capture process. The captured images/videos may be subjected to stitching, projection, region-wise packing and/or encoding in the preparation process.

First, the images/videos may be subjected to the stitching process. The stitching process may be a process of connecting the captured images/videos to create a single panoramic image/video or a spherical image/video.

Then, the stitched images/videos may be subjected to the projection process. In the projection process, the stitched images/videos may be projected onto a 2D image. The 2D image may be referred to as a 2D image frame depending on the context. Projecting onto a 2D image may be referred to as mapping to the 2D image. The projected image/video data may take the form of a 2D image as shown in part 120 of FIG. 1.

The video data projected onto the 2D image may be subjected to the region-wise packing process in order to increase video coding efficiency. Region-wise packing may refer to a process of dividing the video data projected onto the 2D image into regions and processing the regions. Here, the regions may refer to regions obtained by dividing the 2D image onto which 360-degree video data is projected. According to an embodiment, such regions may be distinguished by dividing the 2D image equally or randomly. According to an embodiment, the regions may be divided according to a projection scheme. The region-wise packing process may be an optional process and may thus be omitted from the preparation process.

According to an embodiment, this processing process may include a process of rotating the regions or rearranging the regions on the 2D image in order to increase video coding efficiency. For example, the regions may be rotated such that specific sides of the regions are positioned close to each other. Thereby, efficiency may be increased in coding.

According to an embodiment, the processing process may include a process of increasing or decreasing the resolution of a specific region in order to differentiate the resolutions for regions of the 360-degree video. For example, the resolution of regions corresponding to a relatively important area of the 360-degree video may be increased over the resolution of the other regions. The video data projected onto the 2D image or the region-wise packed video data may be subjected to the encoding process that employs a video codec.

According to an embodiment, the preparation process may further include an editing process. In the editing process, the image/video data may be edited before or after the projection. In the preparation process, metadata for stitching/projection/encoding/editing may be generated. In addition, metadata about the initial viewpoint or the region of interest (ROI) of the video data projected onto the 2D image may be generated.

The transmission process may be a process of processing and transmitting the image/video data and the metadata obtained through the preparation process. Processing according to any transport protocol may be performed for transmission. The data that has been processed for transmission may be delivered over a broadcasting network and/or broadband. The data may be delivered to a reception side on an on-demand basis. The receiving side may receive the data through various paths.

The processing process may refer to a process of decoding the received data and re-projecting the projected image/video data onto a 3D model. In this process, the image/video data projected onto 2D images may be re-projected onto a 3D space. This process may be referred to as mapping projection depending on the context. Here, the shape of the 3D space to which the data is mapped may depend on the 3D model. For example, 3D models may include a sphere, a cube, a cylinder and a pyramid.

According to an embodiment, the processing process may further include an editing process and an up-scaling process. In the editing process, the image/video data may be edited before or after the re-projection. When the image/video data has a reduced size, the size of the image/video data may be increased by up-scaling the samples in the up-scaling process. The size may be reduced through down-scaling, when necessary.

The rendering process may refer to a process of rendering and displaying the image/video data re-projected onto the 3D space. The re-projection and rendering may be collectively expressed as rendering on a 3D model. The image/video re-projected (or rendered) on the 3D model may take the form as shown in part 130 of FIG. 1. The part 130 of FIG. 1 corresponds to a case where the image/video data is re-projected onto a 3D model of sphere. A user may view a part of the regions of the rendered image/video through a VR display or the like. Here, the region viewed by the user may take the form as shown in part 140 of FIG. 1.

The feedback process may refer to a process of delivering various types of feedback information which may be acquired in the display process to a transmitting side. Through the feedback process, interactivity may be provided in 360-degree video consumption. According to an embodiment, head orientation information, viewport information indicating a region currently viewed by a user, and the like may be delivered to the transmitting side in the feedback process. According to an embodiment, the user may interact with content realized in a VR environment. In this case, information related to the interaction may be delivered to the transmitting side or a service provider in the feedback process. In an embodiment, the feedback process may be skipped.

The head orientation information may refer to information about the position, angle and motion of a user's head. Based on this information, information about a region currently viewed by the user in the 360-degree video, that is, viewport information may be calculated.

The viewport information may be information about a region currently viewed by a user in the 360-degree video. Gaze analysis may be performed using this information to check how the user consumes 360-degree video and how long the user gazes at a region of the 360-degree video. The gaze analysis may be performed at the receiving side and a result of the analysis may be delivered to the transmitting side on a feedback channel. A device such as a VR display may extract a viewport region based on the position/orientation of the user's head, vertical or horizontal Field of View (FOV) information supported by the device, and the like.

According to an embodiment, the aforementioned feedback information may be consumed on the receiving side as well as being delivered to the transmitting side. That is, decoding, re-projection and rendering processes of the receiving side may be performed using the aforementioned feedback information. For example, only 360-degree video corresponding to the region currently viewed by the user may be preferentially decoded and rendered using the head orientation information and/or the viewport information.

Here, the viewport or the viewport region may refer to a region of 360-degree video currently viewed by the user. A viewpoint may be a point which is viewed by the user in a 360-degree video and may represent a center point of the viewport region. That is, a viewport is a region centered on a viewpoint, and the size and shape of the region may be determined by FOV, which will be described later.

In the above-described architecture for providing 360-degree video, image/video data which is subjected to a series of capture/projection/encoding/transmission/decoding/re-projection/rendering processes may be called 360-degree video data. The term "360-degree video data" may be used as a concept including metadata or signaling information related to such image/video data.

To store and transmit media data such as the audio or video data described above, a standardized media file format may be defined. According to an embodiment, a media file may have a file format based on ISO base media file format (ISOBMFF).

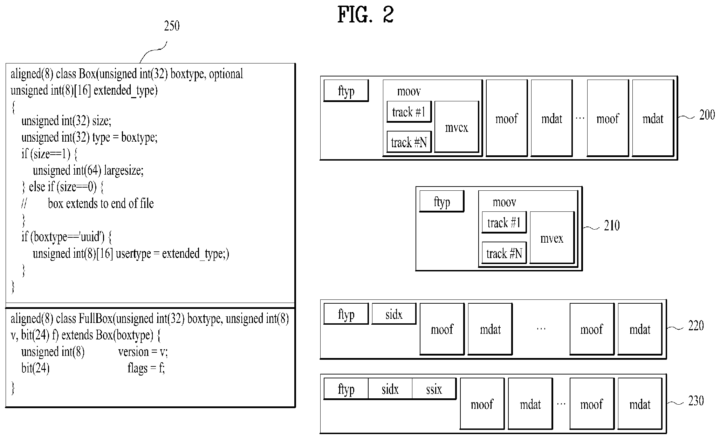

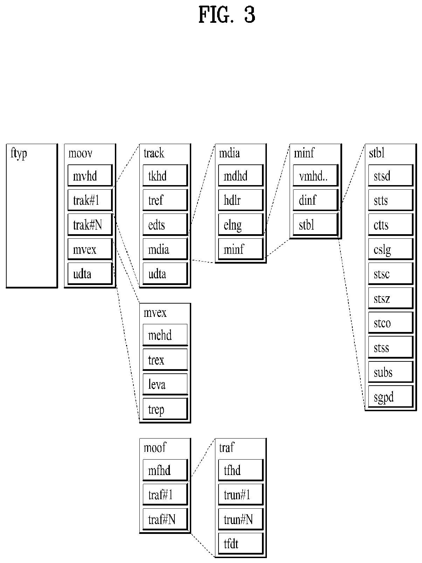

FIGS. 2 and 3 illustrate a structure of a media file according to an embodiment of the present disclosure.

A media file according to the present disclosure may include at least one box. Here, the box may be a data block or an object containing media data or metadata related to the media data. The boxes may be arranged in a hierarchical structure. Thus, the data may be classified according to the boxes and the media file may take a form suitable for storage and/or transmission of large media data. In addition, the media file may have a structure which facilitates access to media information as in the case where the user moves to a specific point in the media content.

The media file according to according to the present disclosure may include an ftyp box, a moov box and/or an mdat box.

The ftyp box (file type box) may provide information related to a file type or compatibility of a media file. The ftyp box may include configuration version information about the media data of the media file. A decoder may identify the media file with reference to the ftyp box.

The moov box (movie box) may include metadata about the media data of the media file. The moov box may serve as a container for all metadata. The moov box may be a box at the highest level among the metadata related boxes. According to an embodiment, only one moov box may be present in the media file.

The mdat box (media data box) may a box that actually contains the media data of the media file. The media data may contain audio samples and/or video samples and the mdat box may serve as a container to contain such media samples.

According to an embodiment, the moov box may include an mvhd box, a trak box and/or an mvex box as sub-boxes.

The mvhd box (movie header box) may contain media presentation related information about the media data included in the media file. That is, the mvhd box may contain information such as a media generation time, change time, time standard and period of the media presentation.

The trak box (track box) may provide information related to a track of the media data. The trak box may contain information such as stream related information about an audio track or a video track, presentation related information, and access related information. Multiple trak boxes may be provided depending on the number of tracks.

According to an embodiment, the trak box may include a tkhd box (track header box) as a sub-box. The tkhd box may contain information about a track indicated by the trak box. The tkhd box may contain information such as a generation time, change time and track identifier of the track.

The mvex box (movie extend box) may indicate that the media file may include a moof box, which will be described later. The moov boxes may need to be scanned to recognize all media samples of a specific track.

The media file according to the present disclosure may be divided into multiple fragments (200). Accordingly, the media file may be segmented and stored or transmitted. The media data (mdat box) of the media file may be divided into multiple fragments and each of the fragments may include a moof box and a divided mdat box. According to an embodiment, the information about the ftyp box and/or the moov box may be needed to use the fragments.

The moof box (movie fragment box) may provide metadata about the media data of a corresponding fragment. The moof box may be a box at the highest layer among the boxes related to the metadata of the corresponding fragment.

The mdat box (media data box) may contain actual media data as described above. The mdat box may contain media samples of the media data corresponding to each fragment.

According to an embodiment, the above-described moof box may include an mfhd box and/or a traf box as sub-boxes.

The mfhd box (movie fragment header box) may contain information related to correlation of multiple divided fragments. The mfhd box may include a sequence number to indicate the sequential position of the media data of the corresponding fragment among the divided data. In addition, it may be checked whether there is missing data among the divided data, based on the mfhd box.

The traf box (track fragment box) may contain information about a corresponding track fragment. The traf box may provide metadata about a divided track fragment included in the fragment. The traf box may provide metadata for decoding/reproducing media samples in the track fragment. Multiple traf boxes may be provided depending on the number of track fragments.

According to an embodiment, the traf box described above may include a tfhd box and/or a trun box as sub-boxes.

The tfhd box (track fragment header box) may contain header information about the corresponding track fragment. The tfhd box may provide information such as a default sample size, period, offset and identifier for the media samples of the track fragment indicated by the traf box.

The trun box (track fragment run box) may contain information related to the corresponding track fragment. The trun box may contain information such as a period, size and reproduction timing of each media sample.

The media file or the fragments of the media file may be processed into segments and transmitted. The segments may include an initialization segment and/or a media segment.

The file of the illustrated embodiment 210 may be a file containing information related to initialization of the media decoder except the media data. This file may correspond to the above-described initialization segment. The initialization segment may include the ftyp box and/or the moov box described above.

The file of the illustrated embodiment 220 may be a file including the above-described fragments. For example, this file may correspond to the above-described media segment. The media segment may include the moof box and/or the mdat box described above. The media segment may further include an styp box and/or an sidx box.

The styp box (segment type box) may provide information for identifying media data of a divided fragment. The styp box may perform the same function as the above-described ftyp box for a divided fragment. According to an embodiment, the styp box may have the same format as the ftyp box.

The sidx box (segment index box) may provide information indicating an index for a divided fragment. Accordingly, the sequential position of the divided fragment may be indicated.

An ssix box may be further provided according to an embodiment 230. When a segment is further divided into sub-segments, the ssix box (sub-segment index box) may provide information indicating indexes of the sub-segments.

The boxes in a media file may further contain extended information about the basis of a box as shown in an embodiment 250 or a FullBox. In this embodiment, the size field, largesize, may indicate the length of a corresponding box in bytes. The version field may indicate the version of a corresponding box format. The Type field may indicate the type or identifier of the box. The flags field may indicate a flag related to the box.

The fields (attributes) for 360-degree video according to the present disclosure may be carried in a DASH-based adaptive streaming model.

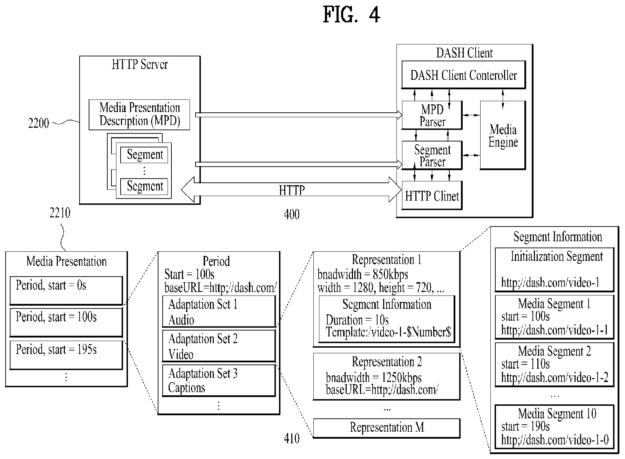

FIG. 4 illustrates an example of the overall operation of a DASH-based adaptive streaming model. A DASH-based adaptive streaming model according to an embodiment 400 shown in the figure describes operations between an HTTP server and a DASH client. Here, DASH (dynamic adaptive streaming over HTTP) is a protocol for supporting HTTP-based adaptive streaming and may dynamically support streaming depending on the network condition. Accordingly, AV content may be seamlessly played.

Initially, the DASH client may acquire an MPD. The MPD may be delivered from a service provider such as the HTTP server. The DASH client may make a request to the server for segments described in the MPD, based on the information for accessing the segments. The request may be made based on the network condition.

The DASH client may acquire the segments, process the segments through a media engine and display the processed segments on a screen. The DASH client may request and acquire necessary segments by reflecting the playback time and/or the network condition in real time (Adaptive Streaming). Accordingly, content may be seamlessly played.

The MPD (media presentation description) is a file containing detailed information allowing the DASH client to dynamically acquire segments, and may be represented in an XML format.

A DASH client controller may generate a command for requesting the MPD and/or segments considering the network condition. In addition, the DASH client controller may control an internal block such as the media engine to use the acquired information.

An MPD parser may parse the acquired MPD in real time. Accordingly, the DASH client controller may generate a command for acquiring necessary segments.

A segment parser may parse the acquired segment in real time. Internal blocks such as the media engine may perform a specific operation according to the information contained in the segment.

The HTTP client may make a request to the HTTP server for a necessary MPD and/or segments. In addition, the HTTP client may deliver the MPD and/or segments acquired from the server to the MPD parser or the segment parser.

The media engine may display content on the screen based on the media data included in the segments. In this operation, the information about the MPD may be used.

The DASH data model may have a hierarchical structure 410. Media presentation may be described by the MPD. The MPD may describe a time sequence of multiple periods for the media presentation. A period may represent one section of media content.

In one period, data may be included in adaptation sets. An adaptation set may be a set of multiple media content components which may be exchanged. An adaption may include a set of representations. A representation may correspond to a media content component. In one representation, content may be temporally divided into multiple segments, which may be intended for appropriate accessibility and delivery. To access each segment, URL of each segment may be provided.

The MPD may provide information related to media presentation. A period element, an adaptation set element, and a representation element may describe a corresponding period, a corresponding adaptation set, and a corresponding representation, respectively. A representation may be divided into sub-representations. A sub-representation element may describe a corresponding sub-representation.

Here, common attributes/elements may be defined. The common attributes/elements may be applied to (included in) sub-representations. The common attributes/elements may include EssentialProperty and/or SupplementalProperty.

The EssentialProperty may be information including elements regarded as essential elements in processing the corresponding media presentation related data. The SupplementalProperty may be information including elements which may be used in processing the corresponding media presentation related data. In an embodiment, descriptors which will be described later may be defined in the EssentialProperty and/or the SupplementalProperty when delivered through an MPD.

The present disclosure is directed to providing a method of providing 3 Degrees of Freedom+ (3DoF+) content as well as the method of providing 360-degree content described above to allow users to experience immersive media.

While the conventional 3DoF-based VR system described above (i.e., the conventional 360-degree content-based system described above) provides a user with a visual/aural experience for different viewing orientations at a fixed position of the user, whereas the 3DoF+ based VR system aims to provide the user with an extended visual/aural experience for viewing orientations at different viewpoints and different viewing positions. That is, the 3DoF+ based VR system may represent a system configured to provide 360-degree content that is rendered to multiple viewing positions at multiple viewpoints.

The concept of viewpoints and viewing positions that are supplementarily defined in the 3DoF+ VR system may be explained as shown in the following figure.

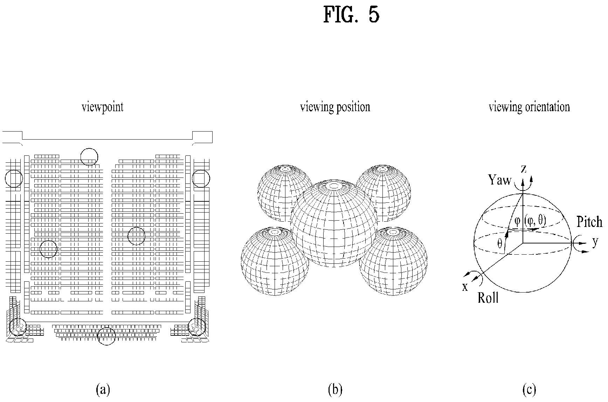

FIG. 5 exemplarily shows the 3DoF+ VR system.

Specifically, FIG. 5(a) exemplarily illustrates multiple viewpoints to which 360-degree content is provided by the 3DoF+ VR system according to embodiments. For example, in FIG. 5(a), multiple specific locations in a specific space (such as a theater) may be represented by viewpoints provided with the 360-degree content. In addition, for example, it may be assumed that video/audio provided to the respective viewpoints in the same specific space has the same time flow.

The 360-degree video reception apparatus according to embodiments may render 360-degree content for multiple viewing positions at a specific viewpoint. Accordingly, the 360-degree video reception apparatus according to embodiments may provide different visual/aural experiences of the 360-degree content to the user according to change in the user's viewing position (head motion) at the specific viewpoint. Here, the 360-degree content may be referred to as 3DoF+ content. The 3DoF+ content may include 3DoF+ video and 3DoF+ audio.

FIG. 5(b) exemplarily illustrates 3D spaces of multiple viewing positions at a specific viewpoint. The 3D space may have a spherical shape. The 360-degree video transmission apparatus according to embodiments may provide video/voice/text information reflecting the relative positions of the respective viewing positions in order to provide different visual/aural experiences according to change in the user's viewing position (head motion) at the specific viewpoint,.

In addition, at a specific viewing position of a specific viewpoint, visual/aural information about various orientations, such as the existing 360-degree content, may be delivered. That is, 360-degree content for the specific viewing position of the specific viewpoint may be rendered in a 3D space. In this case, not only the main source including video/voice/text, etc., but also various additional sources may be integrated and provided, and information about the additional sources may be delivered in association with or independently of the user's viewing orientation.

FIG. 5(c) exemplarily shows a 3D space in which a 360-degree video of a viewing position is rendered. As shown in FIG. 5(c), each point on the spherical surface may be represented by r (radius of the sphere), $\theta$ (the direction and degree of rotation about the z axis), and $\varphi$ (the direction and degree of rotation of the x-y plane toward the z axis) using a spherical coordinate system. In an embodiment, the spherical surface may correspond to the world coordinate system, or the principal point of the front camera may be assumed to be the point (r, 0, 0) of the spherical surface.

The position of each point on the spherical surface may be expressed based on the concept of the aircraft principal axes. For example, the position of each point on the spherical surface may be expressed in terms of pitch, yaw and roll.

An aircraft may rotate freely in three dimensions. The three-dimensional axes are called a pitch axis, a yaw axis, and a roll axis, respectively. In this specification, these axes may be simply expressed as pitch, yaw, and roll or as a pitch direction, a yaw direction, a roll direction. The pitch axis may refer to an axis around which the front nose of the airplane rotates upward/downward. In the illustrated concept of aircraft principal axes, the pitch axis may refer to an axis extending from one wing to the other wing of the aircraft. The yaw axis may refer to an axis around which the front nose of the aircraft rotates leftward/rightward. In the illustrated concept of aircraft principal axes, the yaw axis may refer to an axis extending from the top to the bottom of the aircraft. In the illustrated concept of aircraft principal axes, the roll axis may refer to an axis extending from the front nose to the tail of the aircraft, and rotation in the roll direction may refer to rotation about the roll axis. As described above, a 3D space in the present disclosure may be described based on the concept of pitch, yaw, and roll. In an embodiment, a method based on the concept of X, Y, and Z axes or a spherical coordinate system may be used.

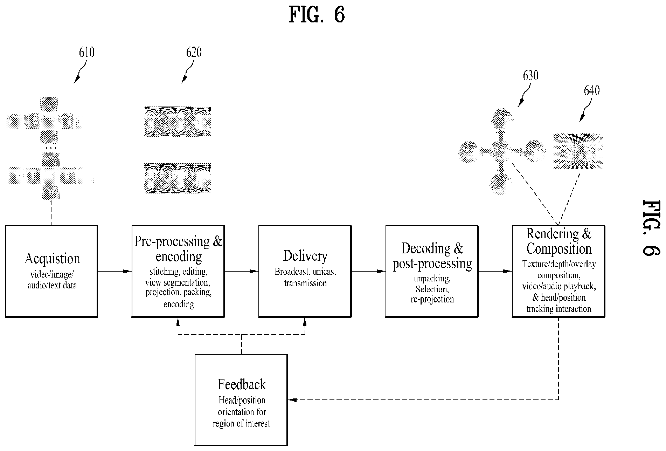

FIG. 6 is a diagram showing an overall architecture for providing 3DoF+ video according to the present disclosure.

Referring to FIG. 6, 3DoF+ video data and/or 3DoF+ audio data may be acquired (Acquisition). Specifically, a High Density Camera Array (HDCA), a Lenslet (microlens) camera, or the like may be used to capture 3DoF+ content, or a new device designed for 3DoF+ video capture may be used. Multiple image/video data sets, such as the acquired image 610 shown in FIG. 6, may be generated according to the camera locations for capture. That is, multiple pieces of image/audio information may be acquired according to the head motion at multiple locations. In this case, the image information may include depth information as well as texture information. As in the case of the acquired image 610 shown in FIG. 6, multiple pieces of information about different viewing positions may be acquired according to different capture locations (viewpoints). In addition, in the process of capturing 3DoF+ content, metadata indicating internal/external setup values of the camera may be generated. For an image generated by a computer, not by a camera, the capture process may be skipped.

Once the image acquisition process is performed, a composition process may be performed. The composition process may be defined as a synthesis process performed to include the image 610 acquired through the image/audio input device, and a picture (video/image, etc.), sound (audio/effect sound, etc.), text (subtitles, etc.) input through an external media device in the user experience.

The pre-processing process of the acquired image 610 may be a process of processing the captured image/video and the metadata delivered in the capture process. The pre-processing process may include all types of pre-processing steps for processing content before transmission, including a stitching process, a color correction process, a projection process, and a view segmentation process of segmenting a view into a primary view and a secondary view to increase coding efficiency, and an encoding process.

Specifically, the stitching process may be a process of creating a panoramic or spherical image/video centered on each camera location by connecting images captured at the locations of the respective cameras in 360-degree directions.

Thereafter, the stitched image/video may be subjected to the projection process. The projection process may refer to a process of deriving a projected picture 620 by projecting each stitched image onto a 2D image. Here, the projection may be expressed as mapping to a 2D image. An image mapped at each camera location may be segmented into a primary view and a secondary view, and different resolutions may be applied for the respective views to improve video coding efficiency. The efficiency of coding may be increased even within the primary view by changing the arrangement or resolution of the mapped images. The image segmentation process according to the views may be referred to as a view segmentation process. The secondary view may not be present depending on the capture environment. The secondary view may refer to an image/video that needs to be played back while the user moves from a primary view to another primary view, and may have a lower resolution than the primary view. However, it may have the same resolution as the primary view when necessary. In some cases, a secondary view may be newly generated as virtual information by the receiver.

In an embodiment, the pre-processing process may further include an editing process. The editing process may represent a process of removing a boundary between regions of a 360-degree video, reducing a difference in color/brightness, or adding a visual effect to an image. In addition, the pre-processing process may include a packing process of re-arranging an image according to the regions, and an encoding process of compressing image information. Like the projected picture 620, a projected picture may be generated based on multiple projection images of different viewing positions according to different capture locations (viewpoints).

In addition, in the pre-processing process, editing of the image/video data may be further performed before or after the projection, and metadata may be generated. Further, in the pre-processing process, metadata about an initial viewing position at which a provided image/video should be played back first, an initial position of a user, a region of interest (ROI), and the like may be generated.

The media delivery process (Delivery) illustrated in FIG. 6 may represent a process of processing and delivering image/video data and metadata obtained in the pre-processing process. For delivery of the image/video data and the metadata, processing according to any transport protocol may be performed, and the pre-processed data may be delivered over a broadcast network and/or broadband. In addition, the pre-processed data may be delivered to the receiving side on an on-demand basis.

The processing process may include all processes performed before image creation to play back images/videos, including a process of decoding the received image/video data and metadata, a re-projection process of mapping or projecting the image/video data of the decoded projected picture onto a three-dimensional (3D) model, and a process of creating and synthesizing a virtual viewing position. The mapped 3D model or projection map may be a sphere, cube, cylinder, or pyramid like a conventional 360-degree video. Alternatively, the 3D model or the projection map may take a modified form of an existing 360-degree video projection map. In some cases, it may be a free-type projection map.

Here, the process of generating and synthesizing a virtual view may represent a process of generating and synthesizing image/video data that should be played back when the user moves between the primary view and the secondary view or between primary views. In order to generate a virtual view, a process of processing the metadata transferred from the capture process and pre-processing process may be required. In some cases, only a part of the 360 image/video may be generated/synthesized in the virtual view.

According to an embodiment, the processing process may further include an editing process, an up scaling process, and a down scaling process. In the editing process, an additional editing process required before playback may be applied after the processing process. When necessary, up scaling or downscaling of the received image/video may be performed.

The rendering process may represent a process of rendering the image/video re-projected after being transmitted or generated such that the image/video may be displayed. The rendering and re-projection processes may be collectively referred to as rendering. Accordingly, the re-projection process may be included in the rendering process. Multiple re-projection results may be produced in the form such as part 630 of FIG. 6, in a manner that a user-centered 360-degree video/image and 360-degree videos/images centered on each of the locations to which the user moves according to the movement direction are created. The user may view a part of the area of the 360-degree video/image according to the device to display the video/image, and the area that the user views may be derived in the form of part 640 of FIG. 6. In addition, when the user moves, the 360-degree video/image may not be fully rendered, but only an image corresponding to the position the user is viewing may be rendered. In addition, the 360-degree video reception apparatus may receive metadata about the user's position and movement and additionally render a video/image of a location to which the user is to move (i.e., a location to which the user is expected to move).

The feedback process may represent a process of delivering, to the transmitting side, various kinds of feedback information that may be acquired in the display process. Through the feedback process, interactivity may occur between the 360-degree content and the user. According to an embodiment, information about the user's head/position orientation and the area (viewport) that the user is currently viewing may be delivered in the feedback process. The information may be delivered to the transmitting side or a service provider in the feedback process. According to an embodiment, the feedback process may be skipped.

The information about the user's position may be information about the user's head position, angle, movement, and movement distance, and the viewport that the user is viewing may be calculated based on the information.

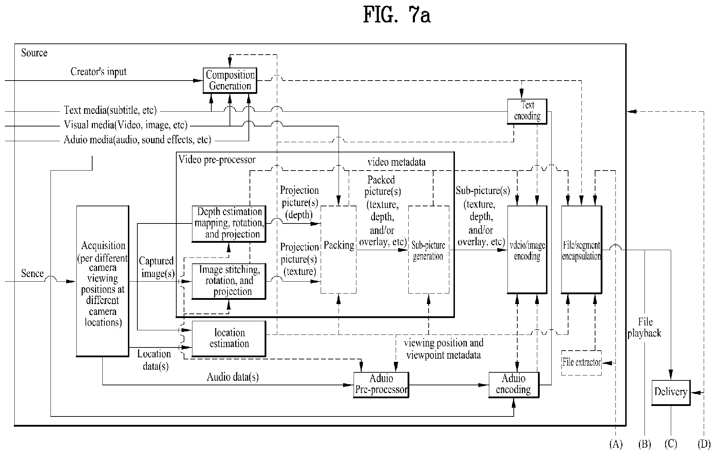

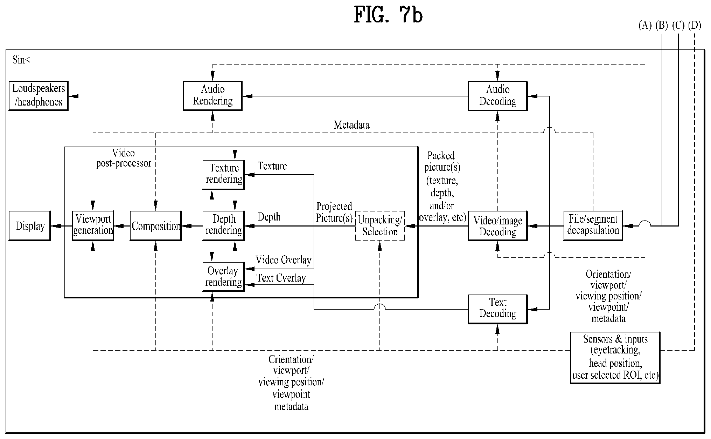

FIGS. 7A and 7B exemplarily show an overall architecture for provision of a 360-degree video performed through a 360-degree video transmission apparatus/360-degree video reception apparatus.

3DoF+ content may be provided by an architecture as shown in FIGS. 7A and 7B. 3DoF+ content may be provided in the form of a file or in the form of a segment-based download or streaming service such as DASH.

The 360-degree video transmission apparatus may include a data acquisition (acquisition) part, a part to processing the acquired information (video/audio pre-processor), a part to compose additional information (composition generation), and a part to perform compression (encoding) and encapsulation for transmission.

For example, referring to FIG. 7A or 7B, 3DoF+ video data and/or 3DoF+ audio data may be acquired as described above (Acquisition). Different pieces of information may be acquired simultaneously or sequentially by an element of the 360-degree video transmission apparatus configured to perform the information acquisition, according to the sensor orientation, the sensor position, and the information acquisition point of the sensor. In addition, in the case of an image, an element of the 360-degree video transmission apparatus that performs information acquisition may acquire image information simultaneously or sequentially according to a viewing orientation, a viewing position, and a viewpoint. In this case, the image information may include video, image, audio, and location information.

In addition, the 3DoF+ audio data may be processed through an audio pre-processing process and an audio encoding process. In these processes, audio-related metadata may be generated. The encoded audio and audio-related metadata may be subjected to processing (file/segment encapsulation) for transmission.

The 3DoF+ video data may contain texture information and depth information. The 360-degree video transmission apparatus may acquire the texture information and the depth information, and perform different pre-processing on the texture information and the depth information according to the characteristics of each component. For example, in the case of the texture information, the 360-degree video transmission apparatus may configure a 360-degree omnidirectional image using the images of different orientations of the same viewing position acquired at the same viewpoint using the image sensor position information. To this end, the apparatus may perform an image stitching process. In addition, the 360-degree video transmission apparatus may perform projection and rotation to change an image to a format for compression.

A depth image may be generally acquired through a depth camera. In this case, a depth image may be generated in the same form as a texture image. Alternatively, depth data may be generated based on separately measured data.

After an image is generated component-wise, the 360-degree video transmission apparatus may perform a process (sub-picture generation) of performing additional transform (packing) into a video format for efficient compression or reconstructing the image by dividing the image into parts that are actually needed.

When video/audio/text information is additionally provided along with the acquired image data (or data for a main service), information for synthesizing the additionally provided information at the time of final playback may be generated and provided. For example, referring to FIGS. 7A and 7B, the composition generation terminal of the 360-degree video transmission apparatus may generate information for synthesizing, at the final playback terminal, media data (video/image information if the additionally provided information is video, audio/sound effect if the additionally provided information is sound, a subtitle if the additionally provided information is a text) externally generated based on the intention of the producer. The information may be transmitted through composition metadata.

Referring to FIGS. 7A and 7B, video/audio/text information from each processing may be compressed through a corresponding encoder, and may be encapsulated in a file unit or a segment unit according to an application. In this case, only necessary information may be extracted according to a method of configuration the video, file, or segment.

Referring to FIGS. 7A and 7B, information allowing the receiver to reconstruct each data may be delivered through a codec or a file format/system level. The information may include information for video/audio reconstruction (video/audio metadata), composition information for overlay (composition metadata), video/audio playback position (viewpoint), and viewing position information (viewing position and viewpoint metadata) according to each viewpoint. The above-described information may be generated through a separate metadata processor.

The 360-degree video reception apparatus may include a part to perform data acquisition, a part to process acquired information (a video/audio pre-processor), a part to compose additional information (composition generation), and a part to perform encoding for transmission and encapsulation. The 360-degree video reception apparatus may also include a sensor configured to tracks a user's motion.

Referring to FIGS. 7A and 7B, a part to tracks a user's motion may generate a viewpoint of a user's region of interest (ROI), a viewing position at the viewpoint, viewing orientation information at the viewing position based on input information of the sensor and the user and the like. The information may be used for each module of the 360-degree video reception apparatus to select or extract an ROI, or may be used in post-processing or the like for emphasizing the information about the ROI. In addition, when the information is delivered to the 360-degree video transmission apparatus, it may be used for file selection (by a file extractor) or sub-picture selection for efficient bandwidth use, various image reconstruction methods (viewport/viewing position/viewpoint dependent processing) based on ROI, and the like.

The decoded video signal may be processed through various processing processes according to an image construction method. For example, when image packing is performed by the 360-degree video transmission apparatus, a process of reconstructing an image based on the information delivered through metadata may be needed. In this case, the reconstruction process may be performed using the video metadata generated by the transmission terminal. In addition, when multiple viewpoints, or multiple viewing positions, or images of various viewing orientations are included in a decoded image, information about an image matching the viewpoint, viewpoint, and viewing orientation information about the ROI of the user generated through tracking of the user's motion may be selected and processed. In this case, the selection process may be performed using the viewpoint- and viewing position-related metadata generated by the transmission terminal. In addition, in the case where multiple components (texture and/or depth information) for a specific viewpoint, viewing position, and viewing orientation are delivered, or video information for overlay is separately delivered, the aforementioned processing process may include a rendering process according to each thereof. A composition process may be performed on the video data (texture, depth, overlay) obtained through the separate rendering process. In this operation, composition metadata generated by the transmission terminal may be used. Finally, information to be reproduced in the user's viewport may be generated according to the user's ROI.

A reproducible sound signal may be generated through an audio renderer and/or a post-processing process for the decoded sound signal. In this case, based on the information about the user's ROI and the metadata delivered to the receiver, information adapted to the user's needs may be generated.

The decoded text signal may be delivered to an overlay renderer and processed into text-based overlay information such as a subtitle. In addition, a separate text post-processing process may be performed as necessary.

The details of the elements of the above-described 360-degree video transmission apparatus and 360-degree video reception apparatus may be classified into functions of a source and a sink in Framework for Live Uplink Streaming (FLUS), respectively.

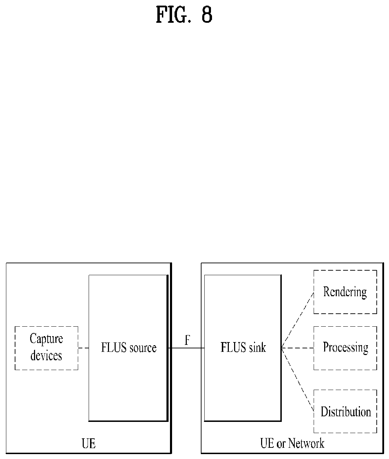

FIG. 8 exemplarily shows a FLUS architecture divided into a source and a sink in Framework for Live Uplink Streaming (FLUS).

Referring to FIG. 8, the function of the source may be implemented in an information acquisition device, and the function of the sink may be implemented on a network. Alternatively, the source/sink may be implemented in a network node, respectively.

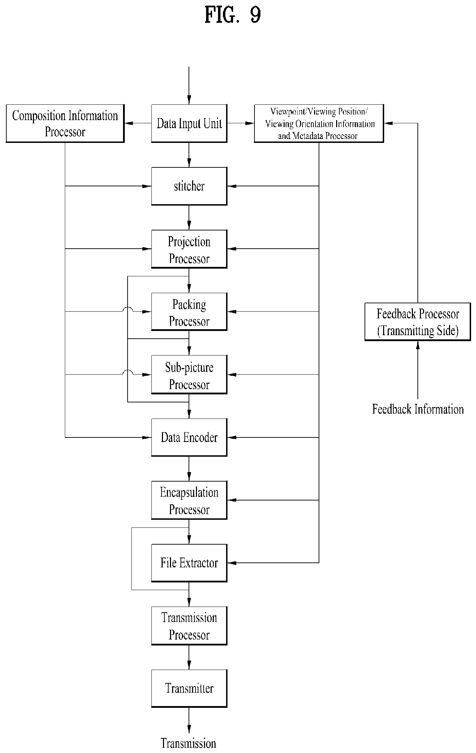

FIG. 9 is a diagram schematically illustrating a configuration of a 360-degree video transmission apparatus to which the present disclosure is applicable.

The 360-degree video transmission apparatus according to the present disclosure may perform operations related to the preparation process or transmission process described above. The 360-degree video transmission apparatus may include a data input unit, a composition information processor, a stitcher, a projection processor, a (region-wise) packing processor, a sub-picture processor, a data encoder, an encapsulation processor, a file extractor, a transmission processor, a transmitter, a viewpoint/viewing position/viewing orientation information and metadata processor, and/or a (transmitting-side) feedback processor as internal/external elements. When the input data is a camera output image, the 360-degree video transmission apparatus may perform stitching for construction of a sphere image (i.e., a 360-degree image rendered in a 3D space) for each viewpoint/viewing position/component.

The data input unit may receive images/videos for each captured viewpoint. These viewpoint-specific images/videos may be images/videos captured by one or more cameras. That is, the images/videos for each viewpoint may include images/videos for multiple viewing positions. The data input unit may also receive metadata generated during the capture process. The data input unit may deliver the input images/videos for each viewing position to the stitcher, and deliver the metadata of the capture process to the signaling processor.

The stitcher may perform stitching on the captured images/videos for each viewpoint. The stitcher may deliver the stitched 360-degree video data to the projection processor. When necessary, the stitcher may receive necessary metadata from the metadata processor and use the same for stitching. The stitcher may deliver metadata generated in the stitching process to the metadata processor. The metadata of the stitching process may contain information such as an indication of whether stitching has been performed and a stitching type.

The projection processor may project the stitched 360-degree video data onto a 2D image. The projection processor may perform projection according to various schemes, which will be described later. The projection processor may perform mapping in consideration of a corresponding depth of 360-degree video data for each viewpoint. When necessary, the projection processor may receive metadata necessary for projection from the metadata processor and use the same in the projection operation. The projection processor may deliver the metadata generated in the projection process to the metadata processor. The metadata of the projection processor may include a type of a projection scheme.

The (region-wise) packing processor may perform the above-described region-wise packing process. That is, the region-wise packing processor may perform processing such as dividing the projected 360-degree video data into regions, rotating or rearranging each region, or changing the resolution of each region. As described above, the region-wise packing process is optional. When region-wise packing is skipped, the region-wise packing processor may be omitted. When necessary, the region-wise packing processor may receive metadata necessary for region-wise packing from the metadata processor and use the same in the region-wise packing operation. The region-wise packing processor may deliver the metadata generated in the region-wise packing process to the metadata processor. The metadata of the region-wise packing processor may include a rotation degree and size of each region.

According to an embodiment, the stitcher, the projection processor and/or the region-wise packing processor described above may be implemented by one hardware component.

Depending on the application, the sub-picture processor may perform packing for creating an integrated image from multiple images or generate a sub-picture that divides the images into images of detailed regions. In addition, when the input data contains video/voice/text supplemental information, information about a method of adding the supplemental information to a central image and displaying the same may be generated, and may be transmitted together with the supplemental information.

The metadata processor may process metadata that may be generated in the capture process, stitching process, projection process, region-wise packing process, encoding process, encapsulation process, and/or transmission process. Using the metadata, the metadata processor may generate 360-degree video-related metadata. According to an embodiment, the metadata processor may generate 360-degree video-related metadata in the form of a signaling table. Depending on the signaling context, the 360-degree video-related metadata may be referred to as metadata or 360-degree video-related signaling information. The metadata processor may also deliver the acquired or generated metadata to internal elements of the 360-degree video transmission apparatus, as necessary. The metadata processor may transmit the 360-degree video-related metadata to the data encoder, the encapsulation processor and/or the transmission processor such that the metadata may be transmitted to the receiving side.

The data encoder may encode 360-degree video data projected onto a 2D image and/or 360-degree video data packed region-wise. The 360-degree video data may be encoded in various formats.

The encapsulation processor may encapsulate the encoded 360-degree video data and/or the 360-degree video-related metadata in the form of a file. Here, the 360-degree video-related metadata may be received from the metadata processor described above. The encapsulation processor may encapsulate the data in a file format such as ISOBMFF, or CFF, or process the data into DASH segments or the like. According to an embodiment, the encapsulation processor may include the 360-degree video-related metadata in a file format. The 360-related metadata may be included, for example, in various levels of boxes in the ISOBMFF, or included as data in separate tracks in the file. According to an embodiment, the encapsulation processor may encapsulate the 360-degree video-related metadata into a file. The transmission processor may process the encapsulated 360-degree video data according to the file format so as to be transmitted. The transmission processor may process the 360-degree video data according to any transport protocol. The processing for transmission may include processing for delivery over a broadcasting network, and processing for delivery over a broadband. According to an embodiment, the transmission processor may receive not only the 360-degree video data, but also the 360-degree video-related metadata from the metadata processor, and may process the same so as to be transmitted.

The transmitter may transmit, over a broadcasting network and/or a broadband, the 360-degree video data and/or 360-degree video-related metadata processed for transmission. The transmitter may include an element for transmission over a broadcasting network and/or an element for transmission over a broadband.

According to an embodiment, the 360-degree video transmission apparatus may further include a data storage unit (not shown) as an internal/external element. The data storage unit may store the encoded 360-degree video data and/or 360-degree video-related metadata before transmitting the same to the transmission processor. These data may be stored in a file format such as ISOBMFF. When a 360-degree video is transmitted in real time, the data storage unit may not be needed. However, when the video is transmitted on-demand, in NRT (Non Real Time), or over a broadband. The encapsulated 360 data may be stored in the data storage unit for a certain period of time and then transmitted.

According to another embodiment, the 360-degree video transmission apparatus may further include a (transmitting-side) feedback processor and/or a network interface (not shown) as internal/external elements. The network interface may receive feedback information from the 360-degree video reception apparatus according to the present disclosure, and deliver the same to the transmitting-side feedback processor. The transmitting-side feedback processor may deliver the feedback information to the stitcher, the projection processor, the region-wise packing processor, the data encoder, the encapsulation processor, the metadata processor, and/or the transmission processor. According to an embodiment, after the feedback information is delivered to the metadata processor, it may in turn be delivered to each internal element. The internal elements that receive the feedback information may reflect the feedback information in subsequent processing of the 360-degree video data.

According to another embodiment of the 360-degree video transmission apparatus of the present disclosure, the region-wise packing processor may rotate each region and map the same onto a 2D image. In this operation, the respective regions may be rotated at different angles in different directions, and then mapped onto the 2D image. The rotation of the regions may be performed in consideration of a portion that neighbored the 360-degree video data on the spherical surface or was stitched before projection. Information about the rotation of the regions, that is, the rotation directions, angles, and the like, may be signaled by 360-degree video-related metadata. According to another embodiment of the 360-degree video transmission apparatus of the present disclosure, the data encoder may perform encoding differently for each region. The data encoder may encode a specific region with high quality and other regions with low quality. The transmitting-side feedback processor may deliver the feedback information received from the 360-degree video reception apparatus to the data encoder, such that the data encoder uses a differentiated encoding method for each region. For example, the transmitting-side feedback processor may deliver the viewport information received from the receiving side to the data encoder. The data encoder may encode regions including an area indicated by the viewport information with higher quality (UHD, etc.) than the other regions.

According to another embodiment of the 360-degree video transmission apparatus of the present disclosure, the transmission processor may perform processing for transmission differently for each region. The transmission processor may apply different transmission parameters (modulation order, code rate, etc.) for the respective regions, such that the data transmitted for each region may have different robustness.

Then, the transmitting-side feedback processor may deliver the feedback information received from the 360-degree video reception apparatus to the transmission processor, such that the transmission process performs the differentiated transmission processing for each region. For example, the transmitting-side feedback processor may deliver viewport information received from the receiving side to the transmission processor. The transmission processor may perform processing for transmission on regions including an area indicated by the viewport information, such that the regions may have higher robustness than the other regions.

The internal/external elements of the 360-degree video transmission apparatus of the present disclosure described above may be hardware elements implemented in hardware. According to an embodiment, the internal/external elements may be changed, omitted, or replaced with other elements. According to an embodiment, supplemental elements may be added to the 360-degree video transmission apparatus.

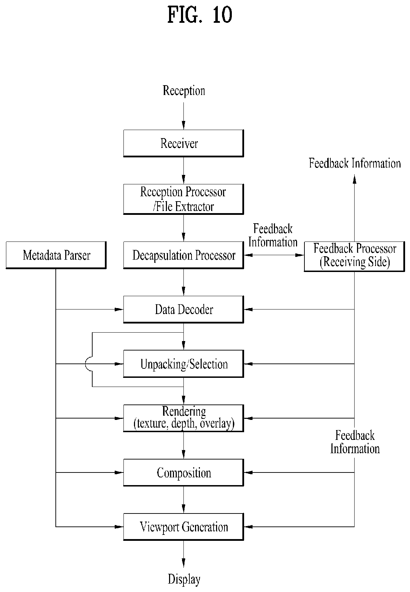

FIG.10 is a diagram schematically illustrating a configuration of a 360-degree video reception apparatus to which the present disclosure is applicable.

The 360-degree video reception apparatus according to the present disclosure may perform operations related to the processing process and/or the rendering process described above. The 360-degree video reception apparatus may include a receiver, a reception processor/file extractor, a decapsulation processor, a data decoder, a metadata parser, an unpacking/selection processor, a renderer, a composition processor, a (receiving-side) feedback processor, and/or a re-projection processor as internal/external elements. A signaling parser may be referred to as a metadata parser.

The receiver may receive 360-degree video data transmitted by the 360-degree video transmission apparatus according to the present disclosure. Depending on the transmission channel, the receiver may receive 360-degree video data over a broadcast network or a broadband. After receiving a bitstream delivered from the transmitter, the receiver may extract a necessary file.

The reception processor may process the received 360-degree video data according to a transport protocol. The reception processor may perform the reverse of the process of the above-described transmission processor such that the reverse process corresponds to the processing for transmission on the transmitting side. The reception processor may deliver the acquired 360-degree video data to the decapsulation processor, and deliver the acquired 360-degree video-related metadata to the metadata parser. The 360-degree video-related metadata acquired by the reception processor may be in the form of a signaling table.

The decapsulation processor may decapsulate the 360-degree video data received in the form of a file from the reception processor. The decapsulation processor may decapsulate the files according to ISOBMFF or the like to acquire the 360-degree video data or 360-degree video-related metadata. The decapsulation processor may select a video stream in the generated file format using the viewpoint/viewing position/viewing orientation information and the video metadata delivered from the feedback processor. The selected bitstream may be reconstructed into image information through the decoder. The acquired 360-degree video data may be delivered to the data decoder, and the acquired 360-degree video-related metadata may be delivered to the metadata parser. The 360-degree video-related metadata acquired by the decapsulation processor may be in the form of a box or track in the file format. When necessary, the decapsulation processor may receive metadata needed for decapsulation from the metadata parser.

The data decoder may decode the 360-degree video data. The data decoder may receive metadata needed for decoding from the metadata parser. The 360-degree video-related metadata acquired in the data decoding process may be delivered to the metadata parser.

For a packed image, the unpacking/selection processor may perform unpacking on the packed image based on the packing information delivered through the metadata. When necessary, the unpacking/selection processor may perform a process of selecting an image and necessary components suitable for the viewpoint/viewing position/viewing orientation delivered from the feedback processor.

The metadata parser may parse/decode the 360-degree video-related metadata. The metadata parser may deliver the acquired metadata to the data decapsulation processor, the data decoder, the re-projection processor, and/or the renderer.

The re-projection processor may re-project the decoded 360-degree video data. The re-projection processor may re-project the 360-degree video data onto a 3D space. The shape of the 3D space may depend on the employed 3D model. The re-projection processor may receive metadata needed for re-projection from the metadata parser. For example, the re-projection processor may receive information about the type of the employed 3D model and the corresponding detailed information from the metadata parser. According to an embodiment, the re-projection processor may re-project only 360-degree video data corresponding to a specific area in the 3D space onto the 3D space using the metadata needed for re-projection.

The renderer may render the re-projected 360-degree video data. As described above, the 360-degree video data may be rendered in the 3D space. In the case where the two processes occur at once as described above, the re-projection processor and the renderer may be integrated and the processes may all be performed by the renderer. According to an embodiment, the renderer may render only a part that the user is viewing according to the viewing position information about the user.

In addition, the renderer may perform a rendering process of reconstructing the texture, depth, and overlay information about an image in a format suitable for playback. Before generating the final image, a composition process that integrates information of different layers may be performed, and an image suitable for a display viewport may be generated and played back.

The user may view some areas of the rendered 360-degree video through a VR display or the like. The VR display is a device that plays back the 360-degree video, and may be included in the 360-degree video reception apparatus (in a tethered state) or connected to the 360-degree video reception apparatus as a separate device (in an un-tethered state).

According to an embodiment of the present disclosure, the 360-degree video reception apparatus may further include a (receiving-side) feedback processor and/or a network interface (not shown) as internal/external elements. The receiving-side feedback processor may acquire feedback information from the renderer, the re-projection processor, the data decoder, the decapsulation processor, and/or the VR display, and process the same. The feedback information may include viewport information, head orientation information, and gaze information. The network interface may receive the feedback information from the receiving-side feedback processor and transmit the same to the 360-degree video transmission apparatus.

As described above, the feedback information may not only be delivered to the transmitting side, but also be consumed at the receiving side. The receiving-side feedback processor may deliver the acquired feedback information to internal elements of the 360-degree video reception apparatus such that the information may be reflected in processes such as rendering. The receiving-side feedback processor may deliver the feedback information to the renderer, the re-projection processor, the data decoder and/or the decapsulation processor. For example, the renderer may preferentially render an area viewed by a user based on the feedback information. The decapsulation processor and the data decoder may preferentially decapsulate and decode the area that the user is viewing or the area to be viewed by the user.

The internal/external elements of the 360-degree video reception apparatus according to the present disclosure described above may be hardware elements implemented in hardware. According to an embodiment, the internal/external elements may be changed, omitted, or replaced with other elements. According to an embodiment, supplemental elements may be added to the 360-degree video reception apparatus.

Another aspect of the disclosure may relate to a method of transmitting 360-degree video and a method of receiving 360-degree video. The method of transmitting/receiving a 360-degree video according to the present disclosure may be implemented by the above-described 360-degree video transmission/reception apparatuses according to the present disclosure or the embodiments of the apparatuses.

The embodiments of the 360-degree video transmission/reception apparatuses, the transmission/reception methods, and the internal/external elements thereof according to the present disclosure described above may be combined with each other. For example, the embodiments of the projection processor and the embodiments of the data encoder may be combined with each other to configure as many embodiments of the 360-degree video transmission apparatus as the combinations. The embodiments configured through such combinations are also within the scope of the present disclosure.

When a user views a single 360-degree video displayed through a 360-degree video reception apparatus, all the information that the user may obtain may be images captured around 360 degrees at a fixed location. However, the user may want information allowing the user to view 3DoF+ content by zooming in or out on some areas. For example, if a user is experiencing a 360-degree video captured from one stand in a soccer stadium, the user may have needs for an experience of a 360-degree video captured on a stand on the opposite side of the stand of the current location, in front of the soccer goalpost or in the center of the stadium. Accordingly, a technique for creating a point where multiple 360-degree video streams captured from multiple viewpoints are connected to each other while allowing the user to move between viewpoints through the point to experience various 360-degree videos may be required. In addition, by signaling, in a stream that bundles multiple 360-degree videos into one, information about a scene for a point recommended by a producer or a scene for a recommended point that the user may want, that is, an ROI or a recommended viewpoint that is common to all points, the user may have a rich experience or acquire the information intended by the producer. In this regard, the present disclosure proposes a method for signaling information about a common recommended viewport or a shared region-of-interest (shared ROI). The method may be applied to rendering, composition, pre-processing, and the like.

In the case of 3DoF+ content in which multiple 360-degree videos or images are provided, there may be a hotspot for two or more video streams. The hotspot may indicate that multiple 360-degree videos are connected through a specific point. The specific point may be represented as a hotspot location.

Two or more VR streams may be connected through a hotspot, and any object included in each VR stream may be set as a Region-Of-Interest (ROI) shared by the VR streams or a recommended viewport. The VR streams may represent streams for the 360-degree videos described above. A VR stream may be referred to as a video stream. In this case, the ROI or recommended viewport information may need to be delivered through each VR stream. When viewpoints connected through the hotspot are all connected through the ROI or recommended viewport information, an environment where there is no information about some areas in 6 degrees-of-freedom (DoF) may be configured, and a 360-degree video may be rendered at any location, and the ROI information in a specific viewport that is not rendered to a 360-degree video may be delivered through each video stream.

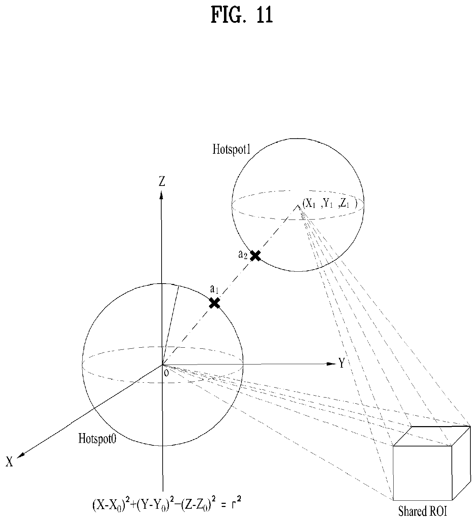

FIG. 11 exemplarily illustrates 360-degree videos connected through a hotspot and a shared ROI for the 360 videos.

Referring to FIG. 11, 360-degree videos at different viewpoints may be connected through hotspots, and the points at which the 360-degree videos are connected may be represented by a1 and a2. In this case, connected hotspot information may be signaled at the position of each of points a1 and a2 at which the 360-degree videos are connected. Further, a shared ROI may be positioned on a sphere for each VR stream, i.e., each 360-degree video, and the position of the shared ROI may be derived from a point where a line connecting the center of the sphere for each 360-degree video and each vertex of the shared ROI meets the surface of the sphere, and the shared ROI may be rendered at the position for the shared ROI.

An origin point that is a reference point of viewpoints may be defined as an initial viewpoint. In addition, a unit in which the positions of the viewpoints are indicated may be defined in the system. For example, the unit may be defined as a meter or centimeter. Alternatively, the radius of the sphere defined at the initial viewpoint may be 1, and the radius of the spheres for the other viewpoints and the distance to the shared ROI may be defined as relative distances derived based on the radius of the sphere for the initial viewpoint.

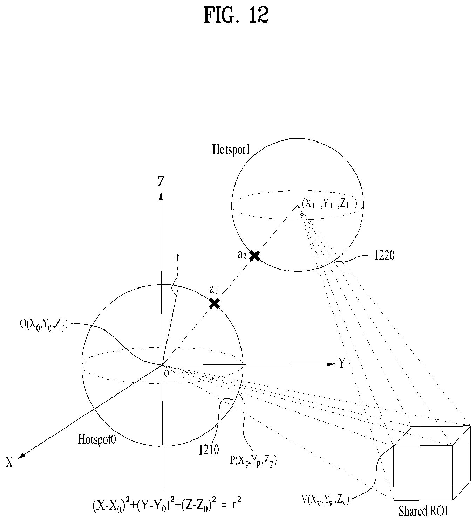

FIG. 12 exemplarily illustrates 360-degree videos connected through a hotspot and a shared ROI for the 360 videos.

Referring to FIG. 12, the 360-degree videos may include Hotspot0 and Hotspot1. When a shared ROI object present at an arbitrary position is viewed from Hotspot0, the shared ROI object may be rendered in a first region 1210 of a first sphere for Hotspot0. When the shared ROI object is viewed from Hotspot1, the shared ROI object may be rendered in a second region 1220 of a second sphere for Hotspot1. Here, the shared ROI may be presented on each sphere as described below.

For example, when the radius of the first sphere is r and the center of the viewpoint where Hotspot0 is located is O (Xo, Yo, Zo), in order to represent a vertex V constituting the shared ROI on the surface of the first sphere, an intersection point between the straight line connecting the O (Xo, Yo, Zo) and the V and the surface of the first sphere may be derived, or the vertex V constituting the shared ROI may be presented at the intersection point.

The intersection point between the line connecting the midpoint of the viewpoint and the vertex of the shared ROI and the surface of the sphere for the viewpoint may be derived based on the following equation.

Equation 1

$$\overrightarrow{VN} = \frac{X - X_v}{X_N - X_v} = \frac{Y - Y_v}{Y_N - Y_v} = \frac{Z - Z_v}{Z_N - Z_v}$$

$$HotspotN: (X - X_N)^2 + (Y - Y_N)^2 + (Z - Z_N)^2 = r^2$$

$$Y_p = \pm \sqrt{\frac{r^2}{\frac{(X_v - X_N)^2 + (Z_v - Z_N)^2}{(Y_v - Y_N)^2} + 1}} + Y_N$$

$$X_p = \frac{Y - Y_N}{Y_v - Y_N}(X_v - X_N) + X_N$$

$$Z_p = \frac{Y - Y_N}{Y_v - Y_N}(Z_v - Z_N) + Z_N$$

$$\underset{[X_p, Y_p, Z_p]}{argmin}(\overrightarrow{VP})$$

Here, $(X_p, Y_p, Z_p)$ may denote the coordinates of the intersection point.

As another example, the vertex V of the shared ROI and a field-of-view (FOV) formed when the vertex V is viewed from the center of the viewpoint, O(Xo, Yo, Zo), may be provided regardless of the radius of the first sphere.

As described above, the spheres for the viewpoints connected through hotspots may be separated from each other, but may overlap with each other.

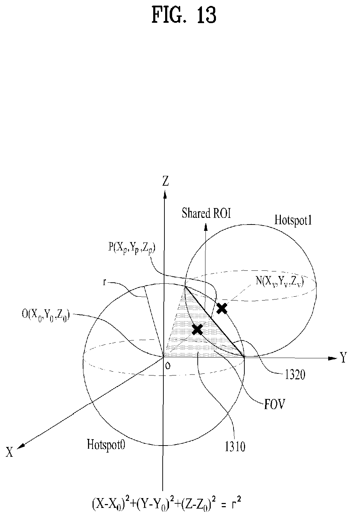

FIG. 13 exemplarily illustrates 360-degree videos connected through hotspots and a shared ROI for the 360 videos. Referring to FIG. 13, 360-degree videos at different viewpoints may be connected through hotspots, and the points at which the 360-degree videos are connected may be represented by a1 and a2. In this case, connected hotspot information may be signaled at the position of each of points a1 and a2 at which the 360-degree videos are connected. Further, a shared ROI may be positioned on a sphere for each VR stream, i.e., each 360-degree video, and the position of the shared ROI may be derived from a point where a line connecting the center of the sphere for each 360-degree video and each vertex of the shared ROI meets the surface of the sphere, and the shared ROI may be rendered at the position for the shared ROI. In addition, as illustrated in FIG. 13, the shared ROI may be present in a region where two spheres overlap. In this case, the shared ROI may be rendered at a point where the distance between the center point of the viewpoint and the shared ROI meets the surface of a sphere according to a preset field-of-view (FOV). For example, the shared ROI may be rendered at a point where the distance between the center point O of Hotspot0 and the shared ROI 1320 meets the surface of the sphere according to the preset FOV 1310 of Hotspot0. The shared ROI 1320 may be in the form of a plane as in the example shown in FIG. 13 or may have a shape such as a circle, a cylinder, or a cube.

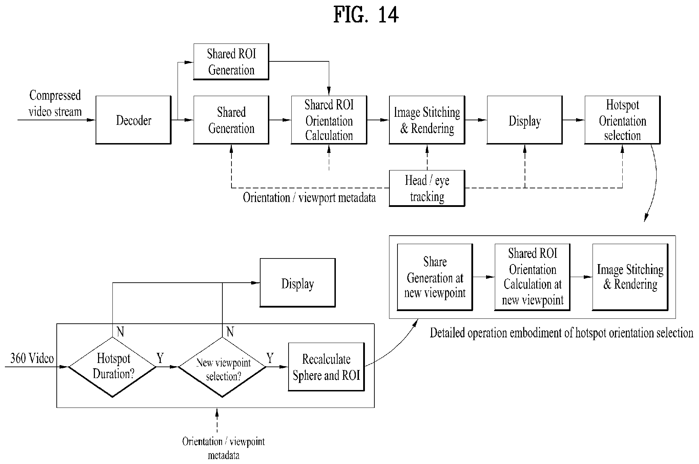

FIG. 14 exemplarily illustrates an operation of a 360-degree video reception apparatus for processing a 360-degree video including the shared ROI and hotspots.

Referring to FIG. 14, 3DoF+ content may be compressed and delivered in the form of a file or stream. Among the delivered 3DoF+ contents, a 360-degree video for an initial viewpoint, that is, a 360-degree video rendered in a 3D space centered on the initial viewpoint, may be decoded. SharedROIINFO and SphereInfo metadata delivered along with the 360-degree video file or stream may be used to position the decoded 360-degree video in the 3D space. Coordinates with respect to the initial viewpoint taken as the origin point and ROI object information may be generated. Then, the orientation of the shared ROI representing the form in which the shared ROI is projected onto the sphere of a viewpoint aligned with the spatial coordinates may be calculated. The image for the shared ROI and the image for the viewpoint may be stitched and re-projected at the calculated orientation value and the coordinates where the sphere is positioned. When the user moves from the viewpoint for the stitched/rendered and displayed image to a new viewpoint, a hotspot orientation selection unit of the 360-degree video reception apparatus may determine whether to select a hotspot. When the hotspot is selected, the 360-degree video reception apparatus may display a 360-degree video for a viewpoint to which the apparatus is to switch. In addition, a new position of the shared ROI may be calculated in consideration of a distance and positional relationship between the switched viewpoint and the shared ROI. Information about the calculated position may be delivered along with the information about the 360-degree video of the switched viewpoint. Thereafter, the 360-degree video of the switched viewpoint and the image for the shared ROI may be stitched, rendered and displayed to the user.

In the conventional ROI information signaling method, which is to signal information about a separate ROI for each 360-degree video or a 3D space (e.g., a sphere) for each viewpoint, an ROI may not be shared among multiple 360-degree videos. On the other hand, in the method proposed in the present disclosure, one ROI (the shared ROI described above) may be shared by multiple 360-degree video streams. In particular, each time shift to a 360-degree video connected through a hotspot occurs, the same ROI (i.e., shared ROI) may be configured as an ROI suitable for the 360-degree video to which the shift has occurred. Accordingly, the ROI information may not be dedicated to a specific viewpoint, and may be signaled as independent information. The signaled ROI information may include information indicating a rendering position differently according to the size and position of a viewpoint.

As illustrated in FIG. 14, the hotspot orientation selection unit may determine whether a hotspot ID of a hotspot included in a 360-degree video for a corresponding viewpoint among 360-degree video streams belongs to a duration. When the hotspot ID does not belong to the duration, the 360 video of the current viewpoint may be displayed without changing the video stream. When the hotspot ID belongs to the duration, the hotspot orientation selection unit may determine whether the hotspot ID is selected, based on an input value received from a user. When the user does not select the hotspot ID, the 360 video of the current viewpoint may be displayed. When the user selects the hotspot ID, the 360-degree video reception apparatus may generate coordinates of a new sphere based on viewpoint information and distance information included in SphereInfo metadata of the hotspot ID. When the shared ROI is viewed from the viewpoint indicated by the shifted viewpoint information, the coordinates on the generated sphere onto which the shared ROI is projected may be calculated, or pre-calculated projected coordinate values may be derived. Thereafter, the 360-degree video reception apparatus may render and display the shared ROI represented on the sphere of the switched viewpoint and the 360-degree video stream of the viewpoint. At this time, a user input value for determining whether to link to the new viewpoint, that is, a user input value indicating whether the user selects the hotspot, may be delivered from an HMD device or an input device operatively connected to a legacy display.

The metadata about the shared ROI configured to enable implementation of the shared ROI may be presented as shown in the tables below.

TABLE 1

| | | | Use | Description |
|---|---|---|---|---|
| **HotspotStruct** | | | 1...N | A structure to declare a hotspot |
| | **SharedROIINFO** | | 1...N | This is for defining shared ROI information, and is preferentially declared before declaration of the positions of every sphere or hotspot such that each the sphere or hotspot can recognize corresponding information. |
| | @NumberOfViewPoint | | M | May indicate the number of center points of spheres or positions of viewpoints to be represent the spheres in the space. |
| | **SphereID** | | 1...N | May indicate an identifier of each sphere or viewpoint. |
| | | **Sphereinfo** | 1...N | May indicate information about each sphere. This may indicate the position and size of a sphere or viewpoint in the space. |

(continued)

| | | | | Use | Description |
|---|---|---|---|---|---|
| | | | ROIINFO | 1...N | May provide ROI information for each sphere separately, or the information may be inferred from SharedROIINFO alone. |
| **Sphereinfo** | | | | **1...N** | |
| | @ViewpointCenterX | | | M | The coordinates of the center of a sphere may be defined as [ViewpointCenterX, ViewpointCenterY, ViewpointCenterZ]. The values may be three-dimensional X, Y, and Z coordinates. Alternatively, the center may be defined as spherical coordinates composed of yaw and roll in the range of [-180°, 180°] and pitch in the range [-90°, 90°] or of Azimuth, Elevation, and Distance. |
| | @ViewpointCenterY | | | M | |
| | @ViewpointCenterZ | | | **M** | |
| | @Distance | | | M | May indicate the radius by distance to indicate the size of the sphere,. The unit of distance may be meter, centimeter, normalized distance, depth, or the like depending on the system requirements, and may be set to 1 by default. |
| | @NumHotspot | | | M | May indicate the number of hotspots that each sphere has. |
| | **HotspotID** | | | **1....N** | May indicate the identifier of each hotspot. |
| | | **HotspotRegion** | | **M** | May indicate the coordinates and region information about each hotpot in the sphere. |
| | | @exposureStartOffset | | M | May provide offset information indicating when to start each hotspot during the entire play time. |
| | | @exposureDuration | | M | May indicate how long the exposure of each hotspot lasts from exposureStartOffset. |
| | | @NextSphereID | | M | May indicate the URI, sphere ID or track ID of a stream to be played next when a hotspot is selected. |
| | | **ConnectedRegionInfo** | | M | May indicate initial viewport information that should be displayed first after connection. |
| **SharedROIINFO** | | | | **1...N** | This is provided to define shared ROI information, and is preferentially declared before declaration of the positions of every sphere or hotspot such that each the sphere or hotspot can recognize corresponding information. |
| | @ROIType | | | O | May provide information about the type of an ROI. The ROI type may be Circle, Square, Cube, Cylinder, or the like. |
| | @NumberOfVertex | | | O | May indicate the number of vertices needed to represent each ROI. It is set to 1 for a circle or a sphere, which cannot be represented by vertices. |
| | **Vertexindex** | | | **1...N** | May indicate the identifier of each vertex. |

(continued)

| | | | Use | Description |
|---|---|---|---|---|
| | | @VertexX | CM | Each vertex of the area where a hotspot is positioned on the sphere may be defined as [VertexX, VertexY, VertexZ] in 3D space. The values may be defined may be defined as spherical coordinates composed of Yaw and Roll in the range of [-180°, 180°] and Pitch in the range [-90°, 90°] or as Azimuth, Elevation, and Distance, respectively. When NumberOfVertex is 1, this may indicate a type that cannot be defined with vertices, such as Cylinder, Sphere, or Circle. VertexX, VertexY, and VertexZ may be used instead as a datatype for expressing each ROI type. For example, in the case of circle, VertexX and VertexY may be the coordinates of the center of the circle, and VertexZ may be the radius. In the case of Sphere, VertexX and VertexY may be represented as azimuth and elevation respectively, and VertexZ as distance. |
| | | @VertexY | CM | |
| | | @VertexZ | CM | |
| | | @InterpolationFlag | CM | May indicate a flag value for determining whether interpolation between vertices is performed. If the value is 1, interpolation is performed. If the value is 0, interpolation is not performed. |
| **ROIINFO** | | | 1...N | May indicate the center information about the ROI |
| | | | | when the shared ROI is displayed in space. |
| | @ViewpointCenterX | | CM | The coordinates of the center of the ROI may be defined as [ViewpointCenterX, ViewpointCenterY, ViewpointCenterZ]. The values may be three-dimensional X, Y, and Z coordinates, or may be defined as spherical coordinates composed of yaw and roll in the range of [-180°, 180°] and pitch in the range of [-90°, 90°] or as Azimuth, Elevation, Distance, respectively. |
| | @ViewpointCenterY | | CM | |
| | @ViewpointCenterZ | | CM | |
| | @ViewpointCenterTilt | | CM | May define the tilt angle, which determines the orientation of the FOV of the ROI. |
| | @FOVHor | | CM | May define the size of the field-of-view (FOV) of a viewport when the ROI type is square. In this case, FOVHor may indicate a horizontal angle and FOVVer may indicate a vertical angle, with respect to the center value of the sphere. |
| | @FOVVer | | CM | |
| | @FOVDistance | | CM | May define the distance of the center of the ROI from the viewpoint center for each sphere. |
| **HotspotRegion** | | | 1...N | |

(continued)

|  |  | Use | Description |
|---|---|---|---|
|  | @HotspotCenterX | M | The center of the area where a hotspot is positioned in the sphere may be defined as [HotspotCenterX, HotspotCenterY, HotspotCenterZ] in 3D space. The values may be defined as spherical coordinates composed of Yaw and Roll in the range of [-180°, 180°] and Pitch in the range of [-90°, 90°], or as Azimuth, Elevation, and Distance, respectively. |
|  | @HotspotCenterY | M |  |
|  | @HotspotCenterZ | **M** |  |
|  | @HotspotRangeHor | M | The Hotspot area from the HotspotCenter may be represented by HotspotRangeHor and HotspotRangeVer, which are horizontal and vertical ranges. |
|  | @HotspotRangeVer | M |  |
| **ConnectedRegionInfo** |  | M |  |
|  | @ConnectedInitialviewportX | M | The coordinates of the center of the initialviewport in the next sphere connected to the hotspot may be defined as [ConnectedInitialviewportX, ConnectedInitialviewportY, ConnectedInitialviewportZ]. The values may be three-dimensional X, Y, and Z coordinates, or may be defined as spherical coordinate composed of yaw and roll in the range of [-180°, 180°] and pitch in the range of [-90°, 90°], or as Azimuth, Elevation, and Distance, respectively. |
|  | @ConnectedInitialviewportY | M |  |
|  | @ConnectedInitialviewportZ | M |  |
|  | @ConnectedInitialviewportTilt | M | May indicate the degree of tilt of the initial viewport. |
|  | @ConnectedInitialviewportRangeHor | M | ConnectedInitialviewportRangeHor and ConnectedInitialviewportRangeVer, which are horizontal and vertical ranges may indicate the area of the initial viewport area from ConnectedInitialviewport may be indicated. They may not be used if there is a pre-declared viewport range. |
|  | @ConnectedInitialviewportRangeVer | M |  |
| **SharedROIINFO** |  | 1...N |  |
|  | @SharedROICenterX | M | The coordinates of the center of the shared ROI may be defined as [ViewpointCenterX, ViewpointCenterY, ViewpointCenterZ]. The values may be three-dimensional X, Y, and Z coordinates, or may be defined as Spherical coordinates composed of Yaw and Roll in the range of [-180, 180] and pitch in the range of [-90, 90], or as Azimuth, Elevation, and Distance, respectively. |
|  | @SharedROICenterY | **M** |  |
|  | @SharedROICenterZ | **M** |  |
|  | @SharedROIRangeHor | M | The area of an object that is an ROI from the SharedROICenter may be indicated by SharedROIRangeHor and SharedROIRangeVer, which are horizontal and vertical ranges. |
|  | @SharedROIRangeVer | **M** |  |

(continued)

| | | | Use | Description |
|---|---|---|---|---|
| **HotspotRegion** | | | 1...N | |
| | @NumOfVertex | | CM | To set the area where a hotspot is positioned on the sphere, the hotspot may be specified based on vertices. To declare the area with the vertices, the number of vertices that may describe the area may be set NumOfVertex. |
| | Vertexindex | | CM | May indicate the identifier of each vertex. |
| | | @VertexX | CM | Each vertex of the area where a hotspot is positioned on the sphere may be defined as [VertexX, VertexY, VertexZ] in 3D space. The values may be defined may be defined as spherical coordinates composed of Yaw and Roll in the range of [-180°, 180°] and Pitch in the range [-90°, 90°] or as Azimuth, Elevation, and Distance, respectively. |
| | | @VertexY | CM | |
| | | @VertexZ | CM | |
| | | @InterpolationFlag | CM | May indicate a flag value for determining whether interpolation between vertices is performed. If the value is 1, interpolation is performed. If the value is 0, interpolation is not performed. |

Here, the fields of boldface type represents fields for elements included in the metadata about the shared ROI, and the fields that are not of boldface type but indicated by @ represent fields for attributes. Further, the Use indication for the fields for the elements indicates the number of fields that may be delivered, and '1...N' indicates that there is no limit to the number. In addition, the Use indication for the fields for the attributes indicates whether the corresponding field is essential, M denotes Mandatory, O denotes Optional, OD denotes optional as a default value, and CM denotes Conditionally Mandatory. Metadata above the ROI may include the fields of Table 1 described above. The metadata about the ROI may be modified in the form of XML, JSON, SEI message, ISO BMFF file format, SDP message, DASH format, etc. It may be extended and used as metadata by each of the reception terminal and the transmission terminal, and may also be used in media processing, such as network stitching or frame packing. Details of the fields in Table 1 will be described later.

According to one embodiment of the metadata about the ROI, when 3DoF+ content is stored based on ISO Base Media File Format (ISO BMFF), the metadata about the ROI may be stored in the following box format.

TABLE 2

```
Class SharedROISampleEntry extends MetadataSampleEntry ('hspt') {
    unsinged int (16)          num_viewpoint;
    SharedROI_Info();

    for(i=0;i<num_viewpoint;i++){
            SphereID[i];
            SphereInfo(SphereID[i]);
            ROI_Info(SphereInfo(SphereID[i]));
    }
}
```

As described in Table 2 above, the metadata about the ROI may be included in SharedROISampleEntry or SharedROISample() in a sample entry or mdat of a timed metadata track in ISOBMFF. In addition, the metadata about the ROI may be delivered in another box in ISOBMFF.

Here, the num_viewpoint field may indicate the number of viewpoints of 3DoF+ content. That is, the num_viewpoint field may indicate the number of viewpoints that may be represented by spheres. When the num _viewpoint field is present in the sample entry, the num viewpoint field may indicate the number of spheres included in each sample of the sample entry. When the num_viewpoint field is present in the sample, the num_viewpoint field may indicate only the number of spheres included in the sample. The SphereID field may indicate an identification (ID) of the sphere for the SphereID field.

In addition, SharedROI_Info(), SphereInfo(), and ROI_Info(), which include metadata about the ROI, may be stored in a track header ('tkhd') box included in the moov box of ISOBMFF as follows.

TABLE 3

```
aligned(8) class TrackHeaderBox  extends FullBox('tkhd', version, flags){
    if (version==1) {
        unsigned int(64)          creation_time;
        unsigned int(64)          modification_time;
        unsigned int(32)          track_ID;
        const unsigned int(32)    reserved = 0;
        unsigned int(64)          duration;
    } else { // version==0
        unsigned int(32)          creation_time;
        unsigned int(32)          modification_time;
        unsigned int(32)          track_ID;
        const unsigned int(32)    reserved = 0;
        unsigned int(32)          duration;
    }
    const unsigned int(32)[2]     reserved = 0;
    template int(16)              layer = 0;
    template int(16)              alternate_group = 0;
    template int(16)              volume = {if track_is_audio 0x0100 else 0};
    const unsigned int(16)        reserved = 0;
    template int(32)[9]           matrix=
    { 0x00010000,0,0,0,0x00010000,0,0,0,0x40000000 };// unity matrix
    unsigned int(32)              width;
    unsigned int(32)              height;
    unsigned int(1)               SharedROI_flag;
    unsigned int(7)               reserved=0;
    if(SharedROI_flag == 1){
                unsinged int (16) num_viewpoint;
                SharedROI_Info();

                for(i=0;i<num_viewpoint;i++){
                        SphereID[i];
                        SphereInfo(SphereID[i]);
                        ROI_Info(SphereInfo(SphereID[i]));
                }
        }
}
```

Here, the SharedROI_flag field may be a flag indicating whether shared ROI information is included in the video track. For example, when the value of the SharedROI flag field is 1, the shared ROI information may be included in the video track. When the value of the SharedROI flag field is 0, the shared ROI information may not be included in the video track. The num_viewpoint field may indicate the number of viewpoints of 3DoF+ content. That is, the num viewpoint field may indicate the number of viewpoints that may be represented by spheres. When the num viewpoint field is present in the sample entry, the num _viewpoint field may indicate the number of spheres included in each sample of the sample entry. When the num _viewpoint field is present in the sample, the num_viewpoint field may indicate the number of spheres included only in the sample. In addition, the SphereID field may indicate an identification (ID) of the sphere for the SphereID field.

The metadata about the ROI may be stored in a video media header ('vmhd') box included in a track box of ISOBMFF as follows.

TABLE 4

```
aligned(8) class VideoMediaHeaderBox extends FullBox('vmhd', version = 0, 1) {
template unsigned int(16)          graphicsmode = 0;
// copy, see below
    template unsigned int(16)[3]    opcolor = {0, 0, 0};
    unsigned int(1)                 SharedROI_flag;
    unsigned int(7)                 reserved=0;
    if(SharedROI_flag == 1){
                unsigned int (16) num_viewpoint;
                SharedROI_Info();

                for(i=0;i<num_viewpoint;i++){
                        SphereID[i];
                        SphereInfo(SphereID[i]);
                        ROI_Info(SphereInfo(SphereID[i]));
                }
        }
}
```

Here, the SharedROI_flag field, the num_viewpoint field, and the SphereID field are the same as those described above. When the metadata about the shared ROI is included in both the track header (tkhd) box and the video media header box, the value of each element of the SharedROI flag field and the metadata about the shared ROI included in the track header box may be replaced with a value defined in the video media header.

A reference type field indicating whether the information about a shared ROI in a track is connected may be delivered. Based on the reference type field, it may be determined whether information about the shared ROI of the track is connected, and additional information may be processed only when the information about the shared ROI is connected. Here, the track reference type 'sroi' may refer to a track reference indicating that there is information about the shared ROI. That is, the 'sroi' may include a track_ID field to which information about the shared ROI is connected.

TrackReferenceTypeBox including the reference type field may be configured as shown in the table below.

TABLE 5

```
aligned(8) Class TrackReferenceBox extends Box('tref'){
      }
      aligned(8) class TrackReferenceTypeBox (unsigned int(32) reference_type)
      extends Box(reference_type) {
              unsigned int(32) Track_IDs[];
      }
```

The types of the track reference indicated by the track_IDs field included in the TrackReferenceTypeBox may be given as shown in the table below.

TABLE 6

| Track Reference | Description |
|---|---|
| 'hint' | The referenced track(s) contain the original media for this hint track |
| 'cdsc' | This track describes the referenced track |
| 'font' | This track uses fonts carried/defined in the referenced track |
| 'hind' | This track depends on the referenced hint track i.e., it should only be used if the referenced hint track is used |
| 'vdep' | This track contains auxiliary depth video information for the referenced video track |
| 'vplx' | This track contains auxiliary parallax video information for the referenced video track |
| 'subt' | This track contains subtitle, timed text or overlay graphical information for the referenced track or any track in the alternate group to which the track belongs, if any. |
| 'sroi' | This track contains information related to Shared ROI information with hotspot for the referenced track or any track in the alternate group to which the track belongs, if any |

Referring to Table 6, when the type of the track reference indicated by the track_IDs field is 'hint', the track indicated by the track_id field may include the original media of the track. The track may be called a hint track.

When the type of the track reference indicated by the track_IDs field is 'cdsc', the corresponding track may describe the track indicated by the track_id field.

When the type of the track reference indicated by the track_IDs field is 'font', the corresponding track may use a font transmitted through the track indicated by the track_id field or a font defined in the track indicated by the track_id field.

When the type of the track reference indicated by the track_IDs field is 'hind', the corresponding track may reference the hint track. Accordingly, the 'hind' type may be indicated only when the hint track is used.

When the type of the track reference indicated by the track_IDs field is 'vdep', it may be indicated that the corresponding track includes auxiliary depth video information for a track indicated by the track_IDs field of the Track-ReferenceTypeBox.

When the type of the track reference indicated by the track_IDs field is 'vplx', it may be indicated that the corresponding track includes auxiliary parallax video information for a track indicated by the track_IDs field of the Track-ReferenceTypeBox.

When the type of the track reference indicated by the track_IDs field is 'subt', it may be indicated that the corresponding track includes subtitle, timed text, and overlay graphical information for a track indicated by the track_IDs field of the TrackReferenceTypeBox. Alternatively, it may be indicated that the corresponding track includes subtitle, timed text, and overlay graphical information for all tracks of an alternate group including the corresponding track.

When the type of the track reference indicated by the track_IDs field is 'sroi', the track_IDs field may indicate a specific track carrying the aforementioned shared ROI-related metadata.

In addition, using the Handler ('hdlr') box positioned in the 'meta' box of ISOBMFF, information indicating the position of a hotspot, a position where a connected VR content (360-degree video) is played after being selected, a time for which the information that the hotspot is connected in the scene of a currently played VR content (360-degree video) is to be exposed, and the like may be delivered. Specifically, 'sroi', which is SharedROIInformationBox among the Handler boxes, may be stored as follows.

TABLE 7

```
Class SharedROIInformationBox extends Box ('sroi'){
        unsinged int (16) num viewpoint;
        SharedROI_Info();
        for(i=0;i<num_viewpoint;i++){
                SphereID[i];
                SphereInfo(SphereID[i]);
        } ROI_Info(SphereInfo(SphereID[i]));
    }
```

Here, the SharedROI_Info() field may include information about the shape and size of the shared ROI. The SphereID field may indicate an identification (ID) of a sphere for the SphereID field. The SphereInfo() field may include information indicating a center point of a viewpoint and a radius of a sphere for the viewpoint, and may also include information about a hotspot for the viewpoint. The ROI_Info() field may include ROI-related information about the viewpoint.

Multiple tracks having the same track_group_type field in the TrackGroupBox and the same track_group_id field may be grouped into one group. The group of tracks may include a track having shared ROI-related information. The TrackGroupBox may be derived as shown in the table below.

TABLE 8

```
aligned(8)              class       TrackGroupBox('trgr') {

}

Aligned(8)              class TrackGroupTypeBox(unsigned int(32)
track_group_type) extends FullBox(track_group_type, version=0, flags = 0)

{

        unsigned int(32)        track_group_id;

        // the remaining data may be specified for a particular
track_group_type

}
```

For example, when the track_group_type field is 'srin', it may indicate that a track belongs to a group capable of expressing a shared ROI. When tracks have the same track_group_id field, it may be indicated that the tracks have the same shared ROI information.

The SharedROI_Info() described above may be configured as shown in the table below.

TABLE 9

```
class SharedROI_Info(){
        unsigned int(8) ROI_type;
        const unsigned int (16) reserved = 0;
        if (ROI_type==1){
                signed int (16)                Center_X;
                signed int (16)                Center_Y;
                signed int (16)                Center_Z;
                unsigned int (16)              Height_range;
                unsigned int (16)              radius;
        }
        else if (ROI_type==2){
                signed int (16)                Center_X;
                signed int (16)                Center_Y;
                signed int (16)                Center_Z;
                unsigned int (16)              Distance;
        }
        else if (ROI_type==3 || ROI_type==4){
                signed int (16)                Center_X;
                signed int (16)                Center_Y;
                signed int (16)                Center_Z;
                unsigned int (16)              Horizontal_range;
                unsigned int (16)              Vertical_range;
        }
        else{
                unsigned int (16) Num_Vertex;
                for(i=0;i<Num_Vertex;i++){
                        signed int (16)   Vertex_X[i];
                        signed int (16)   Vertex_Y;[i]
                        signed int (16)   Vertex_Z[i];
                        unsigned int(1) interpolate;
                        bit(7) reserved = 0;
                }
        }
}
```

The ROI_type field may indicate a type of the shared ROI. For example, as shown in the table below, the type of the shared ROI may be one of cylinder, circle, sphere, square, and 'User Defined'.

TABLE 10

| ROI_Type | Description |
|---|---|
| 0001 | Cylinder |
| 0010 | Sphere |
| 0010 | Circle |
| 0011 | Square |
| 0100 | User Defined |
| 0101~1111 | Reserved |

For example, when the value of the ROI_type field is 1, the type of the shared ROI may be derived as cylinder. When the value of the ROI_type field is 2, the type of the shared ROI may be derived as sphere. When the value of the ROI_type field is 3, the type of the shared ROI may be derived as circle. When the value of the ROI_type field is 4, the type of the shared ROI may be derived as square. When the value of the ROI_type field is 5, the type of the shared ROI may be derived as 'User Defined'.

When the type of the shared ROI is cylinder, the shared ROI-related metadata may contain a radius field, which indicates the radius of a circle corresponding to the top and bottom of the shared ROI, a Center_X field, a Center Y field, and a Center_Z field, which indicate the position of the center point of the circle, and a Height range field indicating the height of the shared ROI.

When the type of the shared ROI is sphere, the shared ROI-related metadata may contain a Center_X field, a Center Y field, and a Center Z field, which indicate the position of the center point of the shared ROI, and a field indicating a distance from the center point to a boundary.

When the type of the shared ROI is circle or square, the shared ROI-related metadata may contain a Center_X field, a Center_Y field, and a Center Z field, which indicate the position of the center point of the shared ROI, and a Horzontal_range field indicating a Horizontal range of the shared ROI, and a Vertical range field indicating a vertical range of the shared ROI.

In the other case, that is, when the type of the shared ROI is 'User Defined', the shared ROI may be represented as a shape composed of vertices, and accordingly the metadata may contain a Num_Vertex field indicating the number of vertices of the shared ROI, and a Vertex X [i] field, a Vertex Y [i] field, and a Vertex Z [i]] field, which indicate the position of each vertex.

The position indicated by the above-described fields or the position of the center point may be Cartesian coordinates, spherical coordinates represented by yaw in the range of [-180°, 180°] and roll and pitch in the range of [-90°, 90°], or coordinates represented by azimuth, elevation, distance, and the like.

Metadata about a 3D space for a viewpoint, that is, a sphere on which a 360-degree video for the viewpoint is rendered, may be delivered. The metadata may be represented by the Shared_Info()described above, and a separate SphereInfo may be delivered for each SphereID. The SharedROI_Info() may be configured as shown in the table below.

TABLE 11

```
class SphereInfo(SphereID){
            signed int (16)            viewpointCenter_X;
            signed int (16)            viewpointCenter_Y;
            signed int (16)            viewpointCenter_Z;
            unsigned int (16)          Distance;
            unsigned int (16)          num_hotspot;
            for (i=0;i<num_hotspot;i++){
                        unsigned int (16)            HotspotID[i];
                        HospotRegion(HotspotID[i]);
                        unsigned int (16)            exposureStartOffset;
                        unsigned int (16)            exposureDuration;
                        unsigned int (16)            Next_track_ID;

            ConnectedRegionInfo();
                        }
            }
}
```

Here, the viewpointCenter field, the viewpointCenter_Y field, and the viewpointCenterZ field may indicate the position of the viewpoint, which is the center point of the sphere. In addition, the Distance field may indicate a distance between the center point of the sphere and an origin, an initial viewpoint, or a center point of a master sphere. The size and position of the sphere of the viewpoint may be derived based on the viewpointCenter field, the viewpointCenter_Y field, the viewpointCenterZ field, and the Distance field.

The sphere of the viewpoint may be connected to another sphere through a hotspot. The metadata may contain a num_hotspot field indicating the number of hotspot points where the sphere of the viewpoint is connected to another sphere. In addition, the metadata may include a HotspotID field indicating the hotspot point identification (ID), and may include HotspotRegion(), which is information about the position and region of the hotspot in the sphere of the viewpoint. Specifically, the metadata may contain an exposureStartOffset field and an exposureDuration field, which indicate a time for which the hotspot is exposed in the entire playback time. When the HotspotID is selected, that is, when the hotspot point is selected, the metadata may contain a Next_track_ID field indicating the next connected Track_ID. In addition, ConnectedRegionInfo() may indicate information about an initial viewport displayed after the next Track_ID is selected.

As described above, the coordinates of all positions or center points may be Cartesian coordinates, or may be coordinates represented by azimuth, elevation, and distance. For example, when coordinates represented by azimuth, elevation, and distance are used, the SharedROI_Info() may be configured as shown in the table below.

TABLE 12

```
class SphereInfo(SphereID){
                signed int (16)              viewpointCenter_Azimuth;
                signed int (16)              viewpointCenter_Elevation;
                signed int (16)              viewportCenter_Distance;
                unsigned int (16)            Distance;
                unsigned int (16)            num_hotspot;
                for (i=0;i<num_hotspot;i++){
                        unsigned int (16)                    HotspotID[i];
                        HospotRegion(HotspotID[i]);
                        unsigned int (16)      exposureStartOffset;
                        unsigned int (16)      exposureDuration;
                        string hotspot_uri;
                        ConnectedRegionInfo();

                }
        }
```

Hotspot information about the sphere of the viewpoint may be delivered. The hotspot information may be represented by HotspotRegion() described above. A separate HotspotRegion() may be delivered for each HotspotID. The HotspotRegion() may be configured as shown in the table below.

TABLE 13

```
class HotspotRegion (HotspotID){
                signed int (16)              HotspotCenterX;
                signed int (16)              HotspotCenterY;
                signed int (16)              HotspotCenterZ;
                unsigned int (16)            HotspotRange_Horizontal;
                unsigned int (16)            HotspotRange_Vertical;
        }
```

The HotspotRegion() may include a HotspotCenterX field, a HotspotCenterY field, and a HotspotCenterZ field, which indicate a center point of the hotspot, and a HotspotRange_Horizontal field and a HotspotRange_Vertical field, which indicate the distances from the center point of the hotspot to both end points in the horizontal and vertical directions, that is, the horizontal range and the vertical range of a region where the hotspot is displayed. The position indicated by the above-described fields or the position of the center point may be Cartesian coordinates, spherical coordinates represented by yaw in the range of [-180°, 180°] and roll and pitch in the range of [-90°, 90°], or coordinates represented by azimuth, elevation, distance, and the like.

The HotspotRegion(), which is information indicating a region for the hotspot, may be configured as shown in the table below.

TABLE 14

```
class HotspotRegion (HotspotID){
                unsigned int (16)              Num_vertex;
                for(i=0;i<Num_Vertex;i++){
                                signed int (16)    HotspotVertex_X[i];
                                signed int (16)    HotspotVertex_Y[i];
                                signed int (16)    HotspotVertex_Z[i];
                                unsigned int(1) interpolate;
                                bit(7) reserved = 0;
                }
}
```

The HotspotRegion() may include a Num_Vertex field indicating the number of vertices of the region for the hotspot, and a HotspotVertex_X[i] field, a HotspotVertex_Y[i] field, and a HotspotVertex_Z[i] field, which indicate the positions of the vertices. The HotspotRegion() may also include an interpolate field indicating the region for the hotspot.

Metadata proposed in the present disclosure may be delivered in a variety of boxes such as a sample entry, a sample group box, and a track group box, in a media file format, may be signaled in a DASH MPD, or may be delivered in SEI in a video bitstream.

As described above, a fixed object or a moving object (e.g., a moving object or a person) may be set as a shared ROI for multiple 360-degree videos. That is, metadata may be needed to provide a user with a shared ROI that changes by time and position. Here, the shared ROI set as the moving object may be represented as a dynamic ROI.

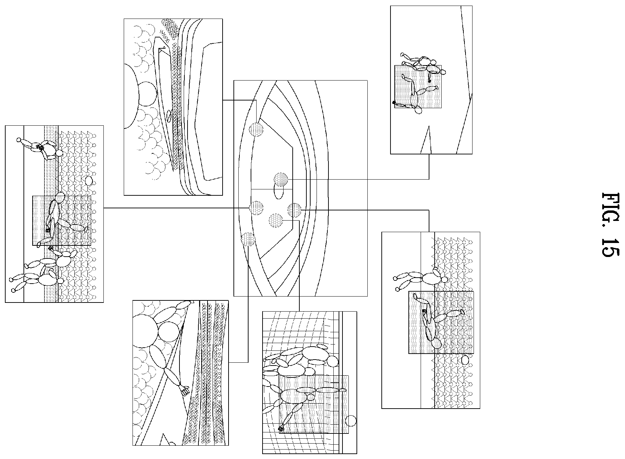

FIG. 15 shows an example of a dynamic ROI set in 3DoF+ content. Referring to FIG. 15, 360-degree video/images captured at different locations in a soccer stadium may be signaled as a multiviewpoint omnidirectional video/image, and a region for a specific player may be designated as a dynamic ROI. In this case, the position of the region representing the player may change, and the dynamic ROI may continuously change as much as the changed position. In addition, the position of the dynamic ROI at the viewpoint changes. Accordingly, information about the dynamic ROI may need to be signaled to a different position for each viewpoint though the ROI is shared between viewpoints.

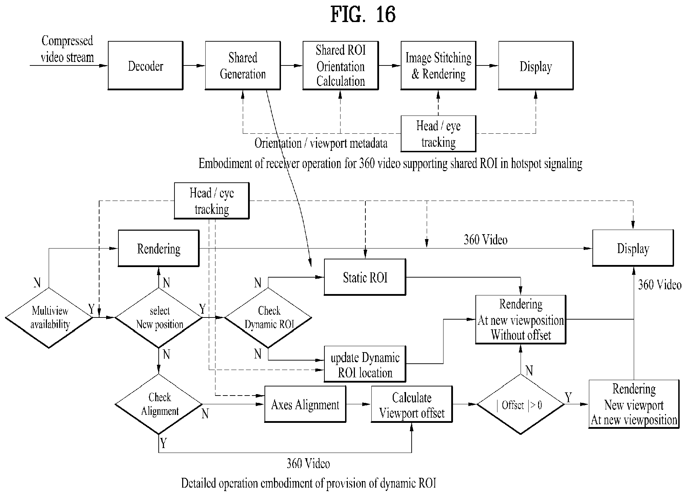

FIG. 16 illustrates an operation of a 360-degree video reception apparatus for processing a 360-degree video including the dynamic ROI and the hotspot. As illustrated in FIG. 16, a processing process of a 360-degree video reception apparatus supporting a multi-view 360-degree video, that is, 3DoF+ content may be performed. After decoding the received signal, the sphere generator may generate spheres in which 360-degree videos for respective viewpoints are rendered. Thus, it may generate spheres having the same radius or spheres having different radii at the viewpoints to compose multiview-supporting 360-degree videos. In this case, a viewpoint center field indicating the position of a necessary viewpoint, that is, the center point of the sphere for the viewpoint and a radius field indicating the radius of the sphere may be delivered through the File Format. For multiview 360-degree videos composed in a spherical shape, a 360-degree video for an initial viewpoint (or origin viewpoint) may be rendered and displayed first. Thereafter, when a 360-degree video of another viewpoint is selected, the multiview selection unit of the 360-degree video reception apparatus may calculate, based on the hotspot_struct field, the axes alignment field, the viewport offset field, and the like, the relationship between a 360-degree video connected to is a specific position of the currently displayed 360-degree video and a viewport that user is viewing near the specific position, and adjust the viewport position to be displayed after connecting to the new 360-degree video, based on the offset derived from the fields. In addition, a new viewport in which the offset is reflected may be displayed. The viewport in which the offset is reflected may be referred to as an adaptive viewport.

In addition, the 360-degree video reception apparatus may determine presence or absence of a dynamic ROI for a 360-degree video. When the dynamic ROI is not present, an existing static ROI or a recommended viewport for the 360-degree video may be supported. When the dynamic ROI is present, information about the dynamic ROI may be provided to a user. In addition, after continuously updating the position of the dynamic ROI according to a playback time, information about the (existing) ROI for the corresponding viewpoint may be displayed. The rendering of the 360-degree video at the corresponding viewpoint may be processed by the multiview selection unit, the image stitcher/renderer, or the display. Here, the viewpoint may be referred to as a viewposition. When there are multiple dynamic ROIs, the dynamic ROIs may be classified through an identifier (ID) for each dynamic ROI, and the user may distinguish each dynamic ROI through a separate label or switch delivered according to the ID for the dynamic ROI. In addition, the user may turn on/off only some of the multiple dynamic ROIs. This function may be adjusted through the HMD or a separate input device.

In addition, referring to FIG. 16, the multiview selection unit may determine whether the multiview is supported.

If the multiview is not supported, an operation for displaying an existing 360-degree video may be performed. If the multiview is supported, the multiview selection unit supports adaptive viewport generation and dynamic ROI only when the user selects a new viewpoint, and multi-view when no new viewpoint is selected. When a new viewpoint is not selected, an operation for displaying an existing 360-degree video may be performed as in the case where the multiview is not supported. When the user selects a new viewpoint, the multiview selection unit may determine whether the axes of the selected viewpoint, presence or absence of a dynamic ROI of the initial viewpoint, and necessity of axes alignment. When axes alignment is needed, the 360-degree video reception apparatus performs the axes alignment. After the alignment is completed, the 360-degree video reception apparatus may calculate a center point distance in 3D coordinates to a viewport of a link point linking the new viewpoint derived based on the metadata for adaptive viewport generation. When the axes alignment is not needed, the 360-degree video reception apparatus may directly calculate a viewport offset. When the total distance of the offset is greater than 0, the 360-degree video reception apparatus may display a new viewport at a new viewpoint. When the offset is 0, the apparatus may display previously set viewport information.

In addition, referring to FIG. 16, when a dynamic ROI is supported or present, the 360-degree video reception apparatus may continuously update the position and area size of the dynamic ROI on the content for one viewpoint. That is, the 360-degree video reception apparatus may render and display the continuously updated dynamic ROI in the viewport of the viewpoint. In the case where the dynamic ROI is absent or not supported, the 360-degree video reception apparatus may signal and display the ROI which is at a fixed position on the sphere of the corresponding viewpoint.

In order to support 360-degree video streams for multiviewpoint, information about a dynamic ROI that changes on a frame-by-frame basis based on the timed metadata and a static ROI may be delivered differently depending on the playback point.

For example, the information about the dynamic ROI and the static ROI may be delivered as shown in the table below.

TABLE 15

```
Class MultiViewpointSampleEntry () extends SampleEntry ('mvpe')
{
                unsigned int(8)                          multiview_flag;
                if (multiview_flag == 0)
                        SphereRegionStruct(0);
                elseif (multiview_flag ==1)
                {
                        unsigned int(16)               origin_viewpoint_ID;
                        unsigned int (8)               Dynamic_ROI_flag;
                        MultiviewPointConfigBox();
                        if (Dynamic_ROI_flag == 0)
                        {
                                        unsigned int (32) static_azimuth_range
                                        unsigned int (32) static_elevation_range
                        }
                }
}
```

Here, 'mvpe' is 4cc that may extend the SampleEntry of ISOBMFF 14496-12 to provide information about static metadata among the timed metadata. In addition, the multiview flag field may indicate whether a corresponding sample supports multiview, that is, 360-degree videos including multiple viewpoints. For example, when the value of the multiview flag field is 0, the multiview flag field may indicate that the received 360-degree video stream is a 360-degree video stream that does not support multiview, and SphereRegionStruct-related information about the 360-degree video stream may be delivered. When the value of the multiview flag field is 1, the multiview flag field may indicate that the received 360-degree video stream is a 360-degree video stream supporting multiview, and metadata including multiview-related information about the 360-degree video stream may be delivered.

The SphereRegionStruct() field may indicate a 3D space for a 360-degree video, that is, information about the structure of a sphere in which the 360-degree video is rendered.

The origin_viewpoint_ID field may indicate the ID of a viewport that is a center point of a 360-degree video connected by a multiview, that is, an ID of a viewpoint that is a center point [0, 0, 0] that is a reference for a position among multiple viewpoints. The viewpoint of the ID indicated by the origin_viewpoint_ID field may be a reference viewpoint of an axes alignment process, which will be described later.

The Dynamic_ROI_flag field may indicate whether a dynamic ROI designated as a moving object/person in an image is set in a multiview 360-degree video stream. For example, when the value of the Dynamic_ROI_flag field is 0, the Dynamic_ROI_flag field may indicate that the dynamic ROI is not set, and an ROI representing a fixed point in the 360-degree video, that is, an object whose position does not change with time is set. When the value of the Dynamic_ROI_flag field is 1, the Dynamic_ROI_flag field may indicate that a dynamic ROI for which the ROI position information may be signaled in real time in a sample box is set in the 360-degree video.

When the received 360-degree video is a multiview-supporting video stream, the MultiviewPointConfigBox may be a structure including information indicating the position of the entire multiview, that is, the positions, IDs, and the like of the viewpoints.

The static_azimuth_range field and the static_elevation range field may indicate the azimuth range and elevation range of a sphere region for each sample referencing a sample entry. The unit of the value indicated by the field may be set to one of 2 to 16 degrees. In addition, the range may be based on the center point of the sphere region. The azimuth range indicated by the static_azimuth_range field may be set to a range of 0 to 360*216, and the elevation range indicated by the static_elevation_range field may be set to a range of 0 to 180*216. When the static_azimuth_range field and the static_elevation_range field are present, and the values indicated by the fields are all 0, the sphere region for each sample may be derived as a point on the sphere surface.

The above-described MultiviewPointConfigBox containing information indicating the positions, IDs, and the like of viewpoints may be delivered in a form shown in the table below.

TABLE 16

```
Class MultiviewPointConfigBox extends FullBox('mvcf')
{
                unsigned int (16)              num_of_multiview
                for (i = 0; i < num_of_multiview; i++)
                {
                                unsigned int (16)         viewpoint_ID;
                                unsigned int (16)         viewpoint_radius;
                                singed int (32)           viewpoint_pos_centerX;
                                singed int (32)           viewpoint_pos_centerY;
                                signed int (32)           viewpoint_pos_centerZ;
                }
}
```

Here, the num_of_multiview field may indicate the total number of 360-degree videos or images that may be connected in the corresponding file or stream. That is, the num_of_multiview field may indicate the number of viewpoints. The viewpoint_ID field may indicate an ID representing each of the 360-degree videos. That is, the viewpoint_ID field may indicate the ID of the corresponding viewpoint.

The viewpoint_radius field may indicate a distance from a corresponding viewpoint to a boundary of the 3D space for the viewpoint. For example, when the type of 3D space for each viewpoint is a sphere, the viewpoint_radius field may indicate the radius of the sphere for the viewpoint. When the type of 3D space for each viewpoint is a cube, the viewpoint_radius field may indicate the distance from the viewpoint to the boundary of the cube. The unit of the distance indicated by the viewpoint_radius field may be millimeters (mm), centimeters (cm), meters (m), a number of pixels, or a relative distance, all of which may be fixed to 1.

The viewpointCenter_X field, the viewpointCenter_Y field, and the viewpointCenterZ field may indicate the position of a viewpoint, that is, the three-dimensional coordinates of the viewpoint. The viewpointCenter_X field, viewpointCenter_Y field, and viewpointCenterZ field may indicate the x component, y component, and z component of the viewpoint. The Cartesian coordinates described above may be used as coordinates of the viewpoint. Alternatively, spherical coordinates using yaw, pitch, and roll components may be used. In this case, information indicating the yaw component, pitch component, and roll component of the viewpoint may be signaled. The unit of the value of the information may be degrees, the yaw component and the roll component may be represented in the range of [-180, 180], and the pitch component may be represented in the range of [-90, 90].

Metadata about the dynamic ROI may be delivered in a form as shown in the table below.

TABLE 17

```
Class MultiViewpointSample () extends Sample ('mtvp')
{
                        unsigned int (16)                  num_of_viewpoint;
                        unsigned int (16)                  viewpoint_ID;
                        for (i = 0 ; I < num_of_viewpoint; i++)
                        {
                                        viewpoint_ID;
                                        MultiviewpointInfoBox();
                        }


}
```

Here, 'mtvp' is a 4cc that may extend the sample of ISOBMFF 14496-12 to provide information about dynamic metadata among the timed metadata. The dynamic metadata may represent the dynamic ROI-related metadata. The above-described information may include different metadata about each frame.

The num_of_viewpoint field may indicate the number of playback viewpoints, that is, viewpoints connected to the current viewpoint for the currently displayed 360-degree video. The 360-degree video reception apparatus may invoke MultiviewpointInfoBox for each connected viewpoint.

The viewpoint_ID field may indicate an ID of a viewpoint connected to the current viewpoint. The Multiviewpoint-InfoBox represents a structure including information about a point connected to the current viewpoint in the 3D space of the viewpoint connected to the current viewpoint, and the size and position of the dynamic ROI.

The MultiviewpointInfoBox may be delivered as shown in the table below.

TABLE 18

```
Class MultiviewpointInfoBox extends FullBox('mvif', 0, 0)
{
                        unsigned int(8)    alignment_availability;
                        if (alignment_availability == 1)
                                        alignment_struct();
                        if (Dynamic_ROI_flag == 1}
                                        DynamicRoiInfoBox()
                        Hospot_Info();


}
```

Here, 'mvif' denotes 4CC, which represents a metadata box containing link-related information about a multi-viewpoint, that is, viewpoints.

The alignment_availability field may be flag information indicating whether axes alignment is needed when the axes of the viewpoint of the viewpoint_ID are not aligned with the axes of the viewpoint of the origin viewpoint_ID described above. For example, when the value of the alignment_availability field is 0, the axes alignment may not be performed. When the value of the alignment_availability field is 1, the axes alignment may be performed for the viewpoint of the viewpoint_ID.

As described above, the Dynamic_ROI_flag field may indicate whether a dynamic ROI specified as a moving object/person in an image is set in a multiview supporting 360-degree video stream. Accordingly, the 360-degree video reception apparatus may invoke DynamicRoiInfoBox(), which is a structure for signaling information about the position and area of the dynamic ROI for the viewpoint of the viewpoint_ID only when the value of the Dynamic_ROI_flag field is 1. DynamicRoiInfoBox() may represent a structure including position and area information about the dynamic ROI, and Hotspot_Info() may represent a structure containing information about a point connected to another viewpoint in the 3D space for the viewpoint of the viewpoint_ID

Metadata related to the axes alignment may be delivered as shown in the table below.

TABLE 19

| aligned (8) | class | alignment_struct(){ |
| | signed int(32) | rotation_longitudeX; |
| | singed int(32) | rotation_latitudeX; |
| | signed int(32) | rotation_longitudeY; |
| | signed int(32) | rotation_latitudeY; |
| | signed int(32) | rotation_longitudeZ; |
| | signed int(32) | rotation_latitudeZ; |
| } | | |

Here, the rotation_longitudeX field, the rotation_longitudeY field, and the rotation_longitudeZ field may indicate the degree to which the x-axis, $\gamma$-axis, and z-axis of a viewpoint should move in the lateral direction, respectively. That is, the rotation_longitudeX field may indicate the angle by which the X-axis of the viewpoint should move in the lateral direction, the rotation_longitudeY field may indicate the angle by which the Y-axis should move in the lateral direction, and the rotation_longitudeZ field may indicate the angle by which the Z-axis should move in the lateral direction. The values indicated by the rotation_longitudeX field, the rotation_longitudeY field, and the rotation_longitudeZ field may be calculated based on the axes of the origin viewpoint.

The rotation_latitudeX field, the rotation_latitudeY field, and the rotation_latitudeZ field may indicate the degree to which the x-axis, y-axis, and z-axis of the viewpoint should move in a latitudinal direction, respectively. That is, the rotation_latitudeX field may indicate the angle by which the X-axis of the viewpoint should move in the latitudinal direction, the rotation_latitudeY field may indicate the angle by which the Y-axis should move in the latitudinal direction, and the rotation_latitudeZ field may indicate the angle by which the Z-axis should move in the latitudinal direction. The values indicated by the rotation_latitudeX field, the rotation_latitudeY field, and the rotation_latitudeZ field may be calculated based on the axes of the origin viewpoint.

Metadata related to the axes alignment may be delivered as shown in the table below.

TABLE 20

| aligned (8) | class | alignment_struct(){ |
| | signed int(32) | rotation_X; |
| | singed int(32) | rotation_Y; |
| | signed int(32) | rotation_Z; |
| } | | |

The axes alignment may be performed in a method different from the above-described method. In this case, the metadata about the axes alignment as shown in Table 20 above may be signaled. Specifically, the 360-degree video reception apparatus may perform the axes alignment by applying the Euler's rotation matrix to the axes of the current viewpoint. The rotation_X field, the rotation_Y field, and the rotation_Z field shown in Table 20 may indicate a movement angle of the X-axis, Y-axis, and Z-axis to be applied to Euler's rotation matrix for axes alignment, that is, an offset. One of the three values described above may be omitted. When one value is omitted, the field for the omitted value may not be signaled and the omitted movement angle may be processed as 0.

Metadata related to a dynamic ROI may be delivered as shown in the table below.

TABLE 21

```
Class DynamicRoiInfoBox extends FullBox ('droi')
{
        unsigned int (16)                num_of_DROI;
        for (i = 0 ; i < num_of_DROI; i++)
        {
                        unsigned int (16)                DROI_ID;
                        unsigned int (16)                DROI_type;
                        if (DROI_type == 'Vertex')
                        {
                                unsigned int (16)                num_of_vertex
                                for (j = 0; j < num_of_vertex;j++)
                                {
                                                signed int (32)        DROI_X[j];
                                                signed int (32)        DROI_Y[j];
                                                signed int (32)        DROI_Z[j];
                                }
                                unsigned int (1)                interpolate;
                                bit (7)                reserved = 0;
                        }
                        else
                        {
                            signed int (32) DROI_centerX;
                                signed int (32)                DROI_centerY;
                                signed int (32)                DROI_centerZ;
                                unsigned int (16)                DROI_area_horizontal;
                                unsigned int (16)                DROI_area_vertical;
                        }
                }
        }
}
```

Here, 'droi' may be 4CC indicating that it is a box for delivering metadata about a dynamic ROI. The num_of_DROI field may indicate the number of dynamic ROIs that may be represented in one viewpoint. The DROI_ID field may indicate an identifier of a dynamic ROI.

The DROI_type field may indicate the type of a dynamic ROI. For example, as shown in the table below, the type of the dynamic ROI may be derived as square, circle, n-gon, or 'User Defined'. Here, the n-gon may represent a figure having n vertices.

TABLE 22

| DROI_Type | Description |
|---|---|
| 0001 | Square |
| 0010 | Circle |
| 0011 | Vertex |
| 0100 | User defined |
| 0100~1111 | reserved |

For example, when the value of the DROI_type field is 1, the type of the dynamic ROI may be derived as square. When the value of the DROI_type field is 2, the type of the dynamic ROI may be derived as circle. When the value of the DROI_type field is 3, the type of the dynamic ROI may be derived as n-gon. When the value of the DROI_type field is 5, the type of the dynamic ROI may be derived as 'User Defined'.

The DROI_area_horizontal field may indicate a horizontal range based on the center point of the dynamic ROI, and the DROI_area_vertical field may indicate a vertical range based on the center point of the dynamic ROI. Accordingly, in the case where the type of the dynamic ROI is square, the type of the dynamic ROI may be derived as rectangle the values of the DROI_area_horizontal field and the DROI_area_vertical field are different from each other. When the values of the DROI_area _horizontal field and the DROI_area_vertical field are equal to each other, the type of the ROI dynamic may be derived as square. In the case where the type of the dynamic ROI is circle, the type of the dynamic ROI may be derived as ellipse when the values of the DROI_area_horizontal field and the DROI_area vertical field are different from each other. When the values of the DROI_area_horizontal field and the DROI_area_vertical field are equal to each other, the type of the dynamic ROI may be derived as circle.

In the case where the type of the dynamic ROI is n-gon, namely, vertex, the dynamic ROI may be represented in the shape of n-gon composed of vertices, and accordingly the dynamic-related metadata may include a Num_Vertex field indicating the number of vertices of the dynamic ROI, and a DROI_X[i] field, a DROI_Y[i] field, and a DROI_Z[i] field, which indicate the position of each vertex.

The dynamic ROI-related metadata may include a Center_X field, a Center_Y field, and a Center_Z field, which indicate the position of the center point of the dynamic ROI.

When the type of the dynamic ROI is n-gon, that is, vertex, the dynamic ROI-related metadata may include an interpolate field. The interpolate field may indicate whether the vertex information value is applied directly to the screen or a linear interpolated value thereof is applied. For example, when the value of the interpolate field is 0, the dynamic ROI may be presented at a position indicated by the DROI_X[i] field, DROI_Y[i] field, and DROI_Z[i] field in the 3D space of the current viewpoint. When the value of the interpolate field is 1, a linear interpolated value of the dynamic ROI may be presented at the position indicated by the DROI_X[i] field, DROI_Y[i] field, and DROI_Z[i] field.

Hotspot-related information about the current viewpoint indicating that a specific point in the 3D space of the current viewpoint is connected to a specific point in the D space of another viewpoint may be delivered. The hotspot-related information may be delivered as shown in the table below.

## TABLE 23

```
Class HotspotInfoBox extends FullBox ('hspt')
{
        unsigned int(16)              num_of_hotspot;
        for (i=0;i < num_of_hotspot;i++)
        {
                unsigned int(16) hotspot_ID;
                unsigned int(8)    Hotspot_Type;

                signed int(32)       hotspotCenter_yaw;
                signed int(32)       hotspotCenter_pitch;
                signed int(32)       hotspotCenter_roll;
                unsigned int(16)  hotspotRange_Horizontal;
                unsigned int(16)  hotspotRange_Vertical;
                unsigned int(16)  viewport_center_yaw;
                unsigned int(16)  viewport_center_pitch;
                unsigned int(16)  viewport_center_roll;

                interactive_viewport_info();
        }
}
```

Here, the Num_of_hotspot field may indicate the number of other viewpoints connected to the viewpoint. That is, the Num_of_hotspot field for the current viewpoint may indicate the number of viewpoints connected to the current viewpoint, namely, the number of hotspots for the current viewpoint.

The Hotspot_Type field may indicate the orientation of a viewport to be displayed when transfer to a connected viewpoint occurs. That is, when a hotspot is selected by the user, the field may indicate an orientation type of the viewport connected to the hotspot. For example, the field may indicate whether the orientation of the viewport before the transfer, that is, the direction in which the viewport faces at the current viewpoint is opposite to the orientation of the viewport displayed in transfer to the viewpoint connected to the hotspot or an orientation that should be displayed after forward movement. For example, a specific hotspot type may be derived as shown in the table below.

TABLE 24

| Hotspot_Type | Description |
|---|---|
| 0001 | Forward |
| 0010 | Mirror |
| 0011 | Jumping |
| 0100 | User defined |
| 0101-1111 | reserved |

When the value of the Hotspot_Type field is 1, the Hotspot_Type field may indicate that the orientation type of the viewport connected to the hotspot is forward. The orientation type 'forward' may indicate that the orientation of the viewport displayed in transfer to a viewpoint connected to the hotspot is the same as the direction in which the viewport at the current viewpoint moves forward, that is, the direction in which the viewport at the current viewpoint faces. When the value of the Hotspot_Type field is 2, the Hotspot_Type field may indicate that the orientation type of the viewport connected to the hotspot is mirror. The orientation type 'mirror' may indicate that the orientation of the viewport displayed in transfer to a viewpoint connected to the hotspot is a reverse direction to the direction in which the viewport at the current viewpoint faces, that is, a direction opposite to the direction in which the viewport at the current viewpoint faces. When the value of the Hotspot_Type field is 3, the Hotspot_Type field may indicate that the orientation type of a viewport connected to the hotspot is jumping. The orientation type 'jumping' may indicate that the orientation of the viewport displayed in transfer to a viewpoint connected to the hotspot is a direction irrelevant to the direction in which the viewport at the current viewpoint faces. In this case, a preset viewport orientation may be applied to the viewpoint connected to the hotspot.

The hotspot_ID field may indicate an ID of the connected viewpoint.

The hotspotCenter_yaw field, hotspotCenter_pitch field, and hotspotCenter_roll field may indicate the center point of a hotspot point connected to another viewpoint in a 360 video of the current viewpoint, that is, the 3D space of the current viewpoint. In this case, as described above, the position of the center point may be represented by a yaw component, a pitch component, and a roll component of spherical coordinates, or may also be represented by an X component, a Y component, and a Z component of Cartesian coordinates. In the case of spherical coordinates, the unit of the values of the hotspotCenter_yaw field, hotspotCenter_pitch field, and hotspotCenter_roll field may be degrees, wherein the yaw component and the roll component be represented in the range of [-180, 180], and the pitch component is represented in the range of [-90, 90].

The hotspotRange_Horizontal field and the hotspotRange_Vertical field are parameters for indicating an area of a hotspot point connected to another viewpoint in the 3D space of the current viewpoint. The hotspotRange_Horizontal field may indicate a horizontal range to both sides of the center point of the hotspot point, and the hotspotRange_Vertical field may indicate a vertical range to both sides of the center point of the hotspot point.

The viewport_center_yaw field, the viewport_center_pitch field, and vieport_center_rollfield may indicate values for compensating for the position of a viewport rendered in transferring to another viewpoint when the center point of the hotspot point is different from the viewport center point for the current viewpoint. That is, the values may represent the center point of the viewport at a viewpoint to which transfer occurs.

The interactive_viewport_info() may represent a structure including information related to a viewport that is rendered at the connected viewpoint.

The aforementioned hotspot types may be specifically described as follows.

The forward type may indicate a case where when switching between viewpoints occurs after axes alignment, the direction of progress (i.e., the orientation of the viewport) at a viewpoint before transfer is the same as the direction of progress of 3DoF+ content after the transfer. That is, the forward type may indicate a case where content that is at a father distance than the previous viewpoint is displayed when the user selects a connected viewpoint in the viewport that is being viewed at the previous viewpoint, such as a road view (i.e., the user causes transfer to the connected viewpoint).

The mirror type may indicate a case where when switching between viewpoints occurs after axes alignment, the orientation of the viewport at a viewpoint before transfer and the orientation of the viewport at a viewpoint after the transfer are facing each other. For example, the mirror type may indicate a case where there are multiple viewpoints in a stadium, two of the viewpoints are at positions facing each other in the stadium, and an adaptive viewport by which compensation for the previous viewpoint orientation is performed is needed as transfer occurs from one viewpoint to the viewpoint at the opposite position.

The jumping type may indicate a case where when switching between viewpoints occurs after axes alignment, the position of the adaptive viewport is derived irrespective of the switching, and thus there is a hotspot for transfer. It may represent a type that does not require compensation for the orientation of the viewport after the transfer. For example, in the case of a door or a window by which the mediator (i.e., a hotspot point) that is a switchable position in the viewpoint before transfer does not recognize the orientation of the viewpoint after the transfer, it is not required to compensate for the information about the orientation of the viewport after the transfer even if the viewport is transferred from the viewpoint before the transfer. This case may correspond to the jumping type.

The interactive_viewport_info() including viewport related information rendered at the connected viewpoint may be configured as shown in the table below.

## TABLE 25

```
aligned (8)     class              interactive_viewport_info(){
                unsigned int(16)                 next_track_ID;
                unsigned int (16) next_viewpoint_ID;
                signed int(32)                   center_interactive_yaw;
                signed int(32)                   center_interactive_pitch;
                signed int(32)                   center_interactive_roll;
                signed int(32)                   center_interactive_tilt;
                unsigned int(16)                 transfer_rate;
                unsigned int(16)                 new_viewport_horizontal;
                unsigned int(16)                 new_viewport_vertical;
}
```

Here, the next_track_ID field may indicate an ID of a track or track group in which a 360-degree video connected after transfer to a new viewpoint is stored, and the next_viewpoint_ID field may indicate an ID of the transferred viewpoint. The Center_interactive_yaw field, the center_interactive_pitch field, and the center_interactive roll field may indicate the yaw component, pitch component, and roll component for the center point of the displayed viewport after transfer from the center point of the selected hotspot point to the connected viewpoint. The center point of the viewport may be represented by the X component, Y component, and Z component of Cartesian coordinates.

The new_viewport_horizontal field and the new_viewport_vertical field may indicate horizontal and vertical ranges based on the center point of the viewport displayed after the transfer. The values of the new_viewport_horizontal field and the new_viewport_vertical field may be equal to a preset viewport size, or may be less or greater than the preset viewport size when necessary.

The Center_interactive_tilt field may indicate the degree of tilt of the viewport on the sphere surface. The transfer_rate field may indicate a weight for displaying a viewport at the position reached through positional shift corresponding to the degree of shift of the user's gaze after transferring to a new viewpoint using the transfer_distance, which is the difference between the position of the user's gaze and the center point of the hotspot derived from the previously received information. For example, when the value of the transfer_rate field is 1, the transfer_distance may be reflected in compensation. When the value of the transfer_rate field is less than 1, a viewport shifted by a shorter distance than the transfer_distance may be rendered. When the value of the transfer_rate field is greater than 1, a viewport shifted by a longer distance than the transfer_di stance may be rendered. In this case, the compensation direction may vary depending on the hotspot type described above. When the hotspot type is jumping, the value of the transfer_rate field may be regarded as 0.

MultiviewPointConfigBox() and MultiviewpointInfoBox() containing the metadata proposed above may be included in a track header ('tkhd') box included in the moov box of ISOBMFF as shown in the table below.

## TABLE 26

```
Aligned (8) class TrackHeaderBox extends FullBox('tkhd', version, flags)
{
if (version==1) {
        unsigned int(64)          creation_time;
        unsigned int(64)          modification_time;
        unsigned int(32)          track_ID;
        const unsigned int(32)    reserved = 0;
        unsigned int(64)          duration;
    } else { // version==0
        unsigned int(32)          creation_time;
        unsigned int(32)          modification_time;
        unsigned int(32)          track_ID;
        const unsigned int(32)    reserved = 0;
        unsigned int(32)          duration;
    }
const unsigned int(32)[2]      reserved = 0;
template int(16)               layer = 0;
template int(16)               alternate_group = 0;
template int(16)volume = {if track_is_audio 0x0100 else 0};
const unsigned int(16)         reserved = 0;
template int(32)[9]            matrix=
{ 0x00010000,0,0,0,0x00010000,0,0,0,0x40000000 };// unity matrix
unsigned int(32)width;
unsigned int(32)              height;
unsigned int(8)  multiview_flag;
                if (multiview_flag == 0)
                        SphereRegionStruct(1);
                elseif (multiview_flag ==1)
                {
                        unsigned int(16)              origin_viewpoint_ID;
                        unsigned int (8)              Dynamic_ROI_flag;
                        MultiviewPointConfigBox();
                        if (Dynamic_ROI_flag == 0)
                        {
                                unsigned int (32) static_azimuth_range
                                unsigned int (32) static_elevation_range
                        }
                        elseif (Dynamic_ROI_flag == 1)
                        {
                                unsigned int (16)    num_of_viewpoint;
                                for (i = 0 ; I < num_of_viewpoint; i++)
                                {
                                        MultiviewpointInfoBox();
                                }
                        }
                }
}
```

In addition, the dynamic ROI-related metadata may be included in the video media header ('vmhd') box included in the track box of ISOBMFF as shown in the table below.

TABLE 27

```
aligned(8) class VideoMediaHeaderBox extends FullBox('vmhd', version = 0, 1) {
template unsigned int(16)          graphicsmode = 0;
// copy, see below
    template unsigned int(16)[3]    opcolor = {0, 0, 0};
    unsigned int(8)                 multiview_flag;
    if (multiview_flag == 0)
                    SphereRegionStruct(1);
    elseif (multiview_flag ==1)
    {
                    unsigned int(16)  origin_viewpoint_ID;
                    unsigned int (8)   Dynamic_ROI_flag;
                    MultiviewPointConfigBox();
                    if (Dynamic_ROI_flag == 0)
                    {
                                    unsigned int (32) static_azimuth_range
                                    unsigned int (32) static_elevation_range

                    }
                    elseif (Dynamic_ROI_flag == 1)
                    {
                                    unsigned int (16) num_of_viewpoint;
                                    for (i = 0 ; I < num_of_viewpoint; i++)
                                    {
                                                    MultiviewpointInfoBox();
                                    }
                    }
    }
}
```

A reference type field indicating whether information about the dynamic ROI is connected while supporting multi-view may be delivered in a track. Thereby, additional information may be processed only when a multiviewpoint stream or file containing a dynamic ROI is connected to the track. A reference type may be defined as described below. The track reference type 'drit' may represent a track reference type indicating that information about a multiview omnidirectional video that supports a dynamic ROI, that is, 3DoF+ content, is included in the track. The 'drit' may include a track_ID field to which the information about the dynamic ROI is connected.

TrackReferenceTypeBox including the reference type field may be configured as shown in the table below.

TABLE 28

```
aligned(8) Class TrackReferenceBox extends Box('tref'){
}
aligned(8) class TrackReferenceTypeBox (unsigned int(32) reference_type) extends
Box(reference_type) {
            unsigned int(32) Track_IDs[];
}
```

The type of the track reference indicated by the track_IDs field included in the TrackReferenceTypeBox may be represented as the table below.

TABLE 29

| Track Reference | Description |
|---|---|
| 'hint' | The referenced track(s) contain the original media for this hint track |
| 'cdsc' | This track describes the referenced track |
| 'font' | This track uses fonts carried/defined in the referenced track |
| 'hind' | This track depends on the referenced hint track i.e., it should only be used if the referenced hint track is used |
| 'vdep' | This track contains auxiliary depth video information for the referenced video track |
| 'vplx' | This track contains auxiliary parallax video information for the referenced video track |
| 'subt' | This track contains subtitle, timed text or overlay graphical information for the referenced track or any track in the alternate group to which the track belongs, if any. |
| 'drit' | This track contains information related to Dynamic ROI information with hotspot for the referenced track or any track in the alternate group to which the track belongs, if any |

Referring to Table 29, when the type of a track reference indicated by the track_IDs field is 'hint', the track indicated by the track_id field may contain the original media of the track. The track may be called a hint track.

When the type of the track reference indicated by the track_IDs field is 'cdsc', the track may describe a track indicated by the track_id field.

When the type of the track reference indicated by the track_IDs field is 'font', the corresponding track may use a font transmitted through the track indicated by the track_id field or a font defined by the track indicated by the track_id field.

When the type of the track reference indicated by the track_IDs field is 'hind', the corresponding track may reference the hint track. Accordingly, the 'hint' type may be indicated only when the hint track is used.

When the type of the track reference indicated by the track_IDs field is 'vdep', it may be indicated that the corresponding track contains auxiliary depth video information for a track indicated by the track_IDs field of the TrackReferenceTypeBox.

When the type of the track reference indicated by the track_IDs field is 'vplx', it may be indicated that the corresponding track contains auxiliary parallax video information for a track indicated by the track_IDs field of the TrackReferenceTypeBox.

When the type of the track reference indicated by the track_IDs field is 'subt', it may be indicated that the corresponding track contains subtitle, timed text, and overlay graphical information for the track indicated by the track_IDs field of the TrackReferenceTypeBox. Alternatively, it may be indicated that the corresponding track contains subtitle, timed text, and overlay graphical information for all tracks of an alternate group including the corresponding track.

When the type of the track reference indicated by the track_IDs field is 'drit', it may be indicated that the corresponding track contains dynamic ROI-related information for the track indicated by the track_IDs field of the TrackReferenceTypeBox.

Using the Handler ('hdlr') box positioned in the 'meta' box of ISOBMFF, the position for playback after selecting the position of a hotspot and connected VR content (a 360-degree video), information indicating that a hotspot is connected in the scene of the currently played VR content (360-degree video), presence or absence of a dynamic ROI, the position of the dynamic ROI, and a time for exposure of the dynamic ROI may be delivered. Specifically, 'drit', which is SharedROIInformationBox among the Handler boxes, may be stored as follows.

TABLE 30

```
Class DynmaicRoiInfoBox extends Box ('drit'){
        unsigned int(8)              multiview_flag;
        if (multiview_flag == 0)
                    SphereRegionStruct(1);
        elseif (multiview_flag ==1)
        {
                    unsigned int(16)  origin_viewpoint_ID;
                    unsigned int (8)   Dynamic_ROI_flag;
                    MultiviewPointConfigBox();
                    if (Dynamic_ROI_flag == 0)
                    {
                                unsigned int (32) static_azimuth_range
                                unsigned int (32) static_elevation_range

                    }
                    elseif (Dynamic_ROI_flag == 1)
                    {
                                unsigned int (16) num_of_viewpoint;
                                for (i = 0 ; I < num_of_viewpoint; i++)
                                {
                                            MultiviewpointInfoBox();
                                }
                    }
        }
}
```

Multiple tracks having the same track_group_type field in the TrackGroupBox and the same track_group_id field may be grouped into one group. The group of tracks may include a track having shared ROI-related information. The TrackGroupBox may be derived as shown in the table below.

TABLE 31

```
aligned(8)          class              TrackGroupBox('trgr') {

}

Aligned(8)          class TrackGroupTypeBox(unsigned int(32)
track_group_type) extends FullBox(track_group_type, version=0, flags = 0)

{

                    unsigned int(32)  track_group_id;

                    // the remaining data may be specified for a particular
track_group_type

}
```

For example, when the track_group_type field is 'drit', it may indicate that the tracks belong to a group capable of expressing a dynamic ROI. When tracks have the same track_group_id field, it may be indicated that the tracks are rendered differently, but have dynamic ROI information of the same dynamic ROI ID.

Metadata proposed in the present disclosure may be delivered in a variety of boxes such as a sample entry, a sample group box, and a track group box, in a media file format, may be signaled in a DASH MPD, or may be delivered in SEI in a video bitstream.

A display screen of a 360-degree video using the hotspot information and the ROI information proposed in the present disclosure may be implemented as described below.

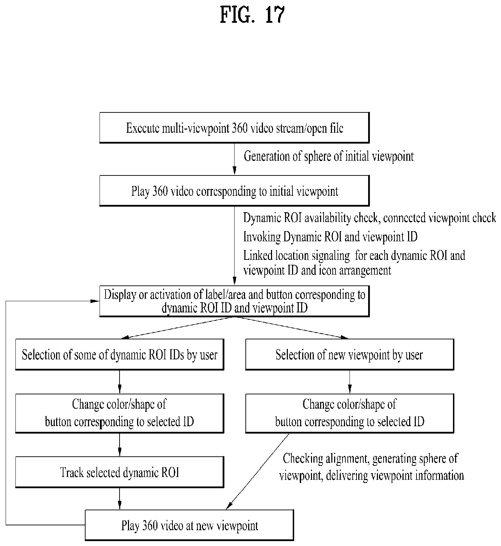

FIG. 17 illustrates an example of configuring a display screen of a 360-degree video by a 360-degree video reception apparatus using hotspot information and ROI information. Referring to FIG. 17, a 360-degree video reception apparatus may decode a 360-degree video for an initial viewpoint based on a 360-degree video stream or file for multiple viewpoints, and render and play the 360-degree video in a 3D space for the initial viewpoint. Thereafter, the 360-degree video reception apparatus may display or activate a label, a region, and a button representing a dynamic ROI for the 360-degree video of the initial viewpoint on a screen displayed based on dynamic ROI-related metadata. Next, when the user selects a dynamic ROI, the 360-degree video reception apparatus may change the color/shape of the button of the selected dynamic ROI, and track the dynamic ROI. In addition, when the user selects another viewpoint, the 360-degree video reception apparatus may change the color/shape of the button for the selected viewpoint, and render and display a 360-degree video for the selected viewpoint.

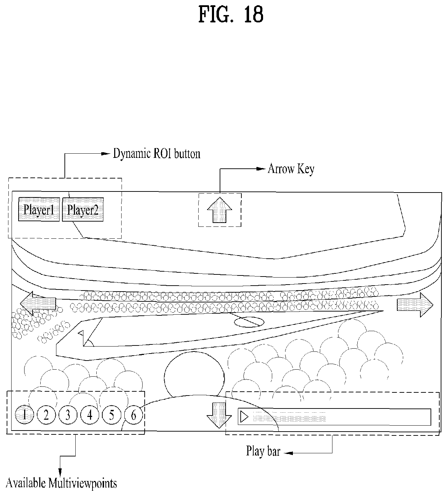

FIG. 18 exemplarily shows a display screen of a 360-degree video constructed using hotspot information and ROI information. Referring to FIG. 18, a 360-degree video in a soccer stadium may be displayed. In addition, referring to FIG. 18, information about a dynamic ROI, a hotspot, a play bar, and the like may be displayed along with a 360-degree video captured in the soccer stadium. For example, as illustrated in FIG. 18, buttons of dynamic ROIs set to specific players in the stadium may be displayed at the upper left, and thus selectable buttons may be arranged so as to track a specific player wanted by the user. The positions of the buttons for the dynamic ROI described above may not be fixed, and may vary depending on the content being played. In addition, referring to FIG. 18, arrow keys pointing up, down, left, and right may be displayed. The arrow keys are arranged for screen shift of a user during play of a 360-degree video, and may be omitted when an HMD device is used. In addition, available multiviewpoints at the bottom left may represent buttons arranged for transfer between multiviewpoints connected to a viewpoint for a 360-degree video that is displayed. Unlike the case illustrated in FIG. 18, the buttons may be arranged at the actual viewpoint position on the content, and the shape and arrangement of the buttons may be changed. The play bar may represent a play bar used when the displayed 360-degree video is a file. The user may move to a desired time zone of the play bar and watch the content in the shifted time zone. When the displayed 360-degree video is a live stream, the play bar may be omitted.

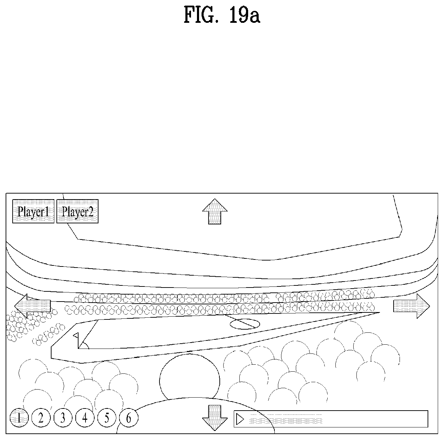

FIGS. 19A to 19F exemplarily illustrate operations by buttons for hotspot information and ROI information.

FIG. 19A shows a screen on which a 360-degree video for the initial viewpoint is played. Referring to FIG. 19A, the ID of a viewpoint currently being played may be displayed in a different color from other viewpoints. In addition, in order to indicate that the dynamic ROI is in a position that cannot be tracked in a 360-degree video currently being played, a button for the dynamic ROI may be displayed in a color indicating that the dynamic ROI is in a position that cannot be tracked. In this case, the 360-degree video reception apparatus may determine whether a dynamic ROI for the current viewpoint is present, based on the aforementioned Dynamic ROI _flag field, and deactivate the button of the ROI by reflecting the determination result. It may check the ID of the currently played viewpoint based on the signaled information, and change the color of the button synchronized with the ID.

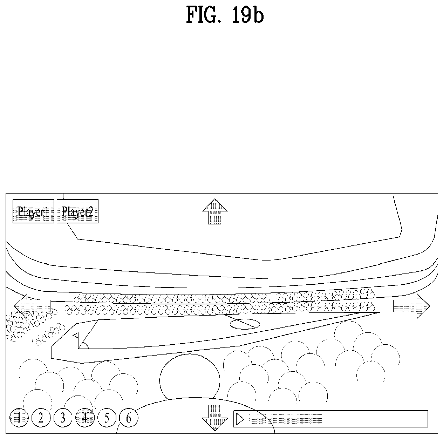

FIG. 19B shows a screen when a button of a viewpoint connected to the viewpoint for the currently displayed 360-degree video is selected. Referring to FIG. 19B, when a user selects a new viewpoint, the button of the selected viewpoint may be displayed in a separate specific color. Thereby, the user may know that the button has been selected. The 360-degree video reception apparatus may recognize the information about the selected viewpoint through a viewpoint ID, and change the color of a button synchronized with the viewpoint ID. It may receive the position and size of a sphere for the viewpoint ID, and stitch, render and display a 360-degree video of the sphere.

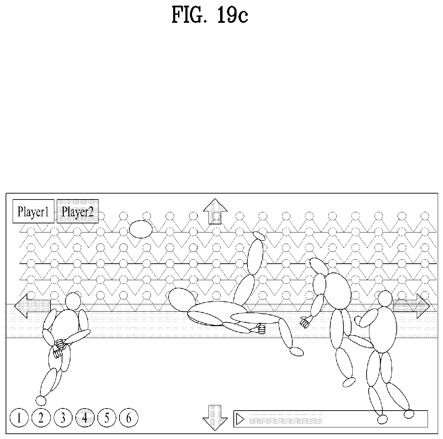

FIG. 19C shows a screen on which a 360-degree video for the selected viewpoint is displayed. Referring to FIG. 19C, the 360-degree video reception apparatus may change the color of a button of a viewpoint being played after transfer to the selected viewpoint such that the user may recognize the change. In addition, the 360-degree video reception apparatus may change the color of the button of the dynamic ROI to inform the user whether the dynamic ROI is activated at the transferred viewpoint. The 360-degree video for the new viewpoint may be played based on the above-described information, and it may be determined whether the dynamic ROI of the viewpoint can be activated, and the button of the dynamic ROI may be activated based on the metadata about the viewpoint. In this case, the color of the button of the viewpoint indicating the position of the dynamic ROI may be changed to a different color.

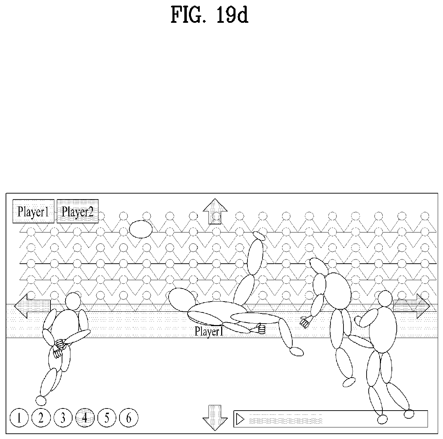

FIG. 19D shows a screen on which a 360-degree video is displayed when the button of a dynamic ROI is selected. Referring to FIG. 19D, when a user selects a dynamic ROI, the 360-degree video reception apparatus may change the color of the button of the dynamic ROI, and display a label for indicating the position of the dynamic ROI. The label may be displayed as a figure of a type representing the area of the dynamic ROI. The selection of the dynamic ROI may be determined by the ID of the dynamic ROI derived based on the signaled information. An area where the label or the dynamic ROI is positioned may be displayed at a corresponding position of the content upon receiving information about the dynamic ROI corresponding to the selected dynamic ROI ID and the center of the dynamic ROI. In addition, the position of the dynamic ROI may be displayed differently based on the position information that is newly updated whenever the dynamic ROI moves.

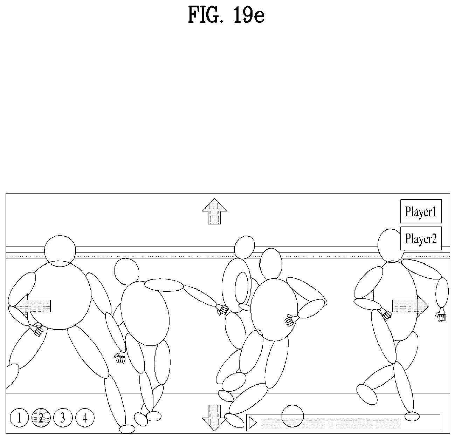

FIG. 19E shows a screen on which a 360-degree video including multiple dynamic ROIs is displayed. When there is more than one dynamic ROI for the currently displayed 360-degree video as shown in FIG. 19E, the 360-degree video reception apparatus may activate all the buttons of the dynamic ROIs, unlike the use case of the above-described User Interface (UI). The user may select one button among the multiple buttons to track only a dynamic ROI for the button, or may select multiple buttons to track dynamic ROIs for the buttons. The total number of activated dynamic ROIs may be determined based on the num_of_DROI field described above, and a dynamic ROI ID for each of the dynamic ROIs may be allocated.

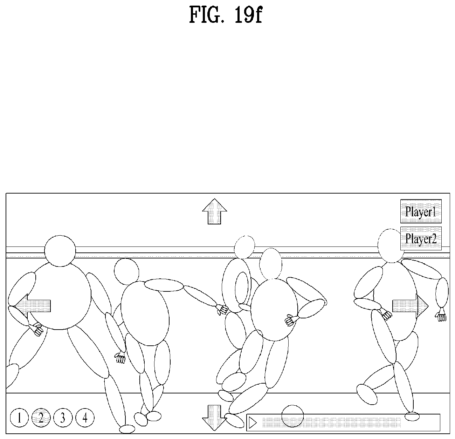

FIG. 19F shows a screen on which a 360-degree video is displayed when all buttons for multiple dynamic ROIs are selected. Referring to FIG. 19E, when the user selects all the buttons for the two dynamic ROIs, the 360-degree video reception apparatus may change the color of the buttons to indicate that they are all selected, and may display a label on top of each dynamic ROI. Instead of displaying a label, the 360-degree video reception apparatus may display a figure indicating an area where the dynamic ROI is positioned. The position and size of the dynamic ROI may be delivered through the metadata about the ID of the dynamic ROI. The position and size may be delivered differently for each dynamic ROI, and may vary with time.

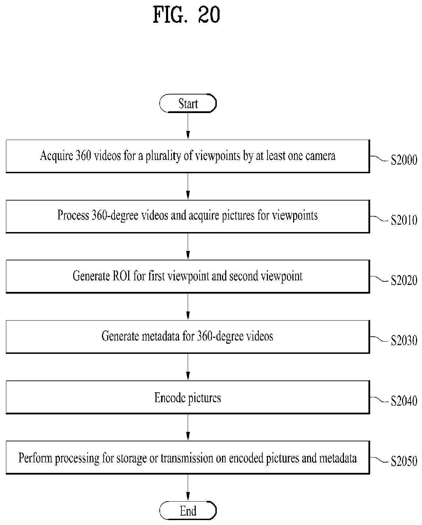

FIG. 20 schematically illustrates a method of processing 360-degree video data by a 360-degree video transmission apparatus according to the present disclosure. The method disclosed in FIG. 20 may be performed by the 360 degree video transmission apparatus disclosed in FIG. 9. For example, in FIG. 20, S2000 may be performed by the data input unit of the 360-degree video transmission apparatus, S2010 may be performed by the projection processor of the 360-degree video transmission apparatus, S2020 and S2030 may be performed by the metadata processor of the 360-degree video transmission apparatus, S2040 may be performed by the data encoder of the 360-degree video transmission apparatus, and S2050 may be performed by the transmission processor of the 360-degree video transmission apparatus. The transmission processor may be included in the transmitter.

The 360-degree video transmission apparatus acquires 360-degree videos for multiple viewpoints by at least one camera (S2000). The 360-degree video transmission apparatus may acquire the 360-degree videos for multiple viewpoints captured by at least one camera.

The 360-degree video transmission apparatus processes the 360-degree videos and acquire pictures for the viewpoints (S2010). The 360-degree video transmission apparatus may perform projection on a 2D image according to a projection scheme for the 360-degree video among various projection schemes, and acquire a projected picture. The various projection schemes may include an equirectangular projection scheme, a cylindrical projection scheme, a cube projection scheme, and a panoramic projection scheme. Further, the projection schemes may include any user defined projection scheme defined by the user. The projection schemes may further include projection schemes other than the above-described projection schemes. The projected picture may include regions representing the facets of a 3D projection structure of the projection scheme.

In addition, the 360-degree video transmission apparatus may perform processing such as rotating, rearranging each of the regions of the projected picture, or changing the resolution of each region. The processing process may be referred to as the region-wise packing process.

The 360-degree video transmission apparatus may not apply the region-wise packing process to the projected picture. Alternatively, the 360-degree video transmission apparatus may apply the region-wise packing process to the projected picture, and acquire the packed picture including a region to which the region-wise packing process is applied.

In addition, the 360-degree video transmission apparatus may derive a picture for a specific viewpoint by performing a stitching process for the specific viewpoint. For example, the 360-degree video transmission apparatus may derive captured scenes for a specific viewpoint, stitch the captured scenes, and process the stitched captured scenes to derive a picture for the specific viewpoint.

The 360-degree video transmission apparatus may generate a hotspot for a specific viewpoint. Here, the hotspot may indicate a link between the specific viewpoint and another viewpoint. For example, the 360-degree video transmission apparatus may generate a hotspot between a first hotspot point of a 3D space for a first viewpoint and a second hotspot point of a 3D space for a second viewpoint. In this case, the 360-degree video transmission apparatus may generate information about the hotspot of the first viewpoint. For example, metadata about the first viewpoint may contain information indicating the number of hotspots for the first viewpoint, hotspot ID information, information about a viewpoint connected through the hotspot, type information about the hotspot, and information about an area where the hotspot is displayed.

The 360-degree video transmission apparatus generates a Region of Interest (ROI) for the first viewpoint and the second viewpoint (S2020). The ROI may indicate an area for an object included in 360-degree videos of the first viewpoint and the second viewpoint in common. For example, a first area in a 3D space in which the 360-degree video of the first viewpoint is rendered may be generated as the ROI, and a second area in a 3D space in which the 360-degree video of the second viewpoint is rendered may be generated as the ROI. In this case, the metadata about the first viewpoint may contain information about the ROI representing the first area, and the metadata about the second viewpoint may contain information about the ROI representing the second area. The information about the ROI may include information indicating the type of the ROI and information indicating the size of the ROI. In addition, flag information indicating whether an ROI for multiple viewpoints is present may be generated. In addition, the ROI may represent an area for an object that is included in 360-degree videos of the first viewpoint and the second viewpoint in common, but the object may be an object whose position and/or shape change with time. That is, the ROI may be an area whose position and/or size change with time. Multiple ROIs for the first viewpoint including the ROI for the first and second viewpoints may be derived. The ROIs may be ROIs for the first viewpoint and viewpoints other than the first viewpoint.

The 360-degree video transmission apparatus generates metadata about the 360-degree video (S2030). The metadata may contain a multiview_flag field, a num_viewpoint field, a SphereID field, an origin viewpoint_ID field, a viewpoint_ID field, a viewpoint_radius field, a viewpoint_pos_centerX field, a viewpoint_pos_centerY field, a viewpoint_pos_centerZ field, a viewpointCenter_Azimuth field, a viewpointCenter _Elevation field, a viewportCenter_Distance field, a Distance field, a rotation_longitudeX field, a rotation_longitudeY field, a rotation_longitudeZ field, a rotation_latitudeX field, a rotation_latitudeY field, a rotation_latitudeZ field, a rotation_X field, a rotation_Y field, a rotation_Z field, a SharedROI_flag field, a Dynamic_ROI_flag field, a ROI_type field, a Center_X field, a Center_Y field, a Center_Z field, a Height_range field, a radius field, a Distance field, a Horizontal_range field, a Vertical_range field, a Vertex_X field, a Vertex_Y field, a Vertex_Z field, an interpolate field, a num_of_DROI field, a DROI_ID field, a DROI_type field, a DROI_centerX field, a DROI_centerY field, a DROI_centerZ field, a DROI_area_horizontal field, a DROI_area_vertical field, a num_of_vertex field, a DROI_X field, a DROI_Y field, a DROI_Z field, a num_of_hotspot field, a hotspot_ID field, a Hotspot Type field, a exposureStartOffset field, a exposureDuration field, a HotspotCenterX field, a HotspotCenterY field, a HotspotCenterZ field, a hotspotCenter_yaw field, a hotspotCenter_pitch field, a hotspotCenter_rollfield, a HotspotRange _Horizontal field, a HotspotRangeVertical field, a next_track_ID field, a next viewpoint _ID field, a Center_interactive_yaw field, a center_interactive_pitch field, a center_ interactive roll field, a center_interactive_tilt field, a transfer_rate field, a new_viewport_horizontal field, a new viewport vertical field, a static_azimuth_range field, and a static _elevation range field, as described above. The fields have meanings as described above

Specifically, as an example, the metadata may contain information about a hotspot for the first viewpoint and information about the ROI. In addition, the metadata may contain information about the number of viewpoints, information about the position of the first viewpoint, and information about a viewport of the first viewpoint. In addition, the metadata may contain information indicating the viewpoint ID of a viewpoint that is the origin.

The information about the position of the first viewpoint may include information indicating the viewpoint ID of the first viewpoint, information indicating the x value of the first viewpoint, information indicating the y value of the first viewpoint, and information indicating the z value of the first viewpoint, and/or information indicating the radius of the sphere for the first viewpoint. The sphere may represent a 3D space in which a 360-degree video for the first viewpoint is rendered. The information indicating the viewpoint ID of the first viewpoint may represent the viewpoint_ID field. The information indicating the x value of the first viewpoint may represent the viewpoint_pos_centerX field, the information indicating the y value of the first viewpoint may represent the viewpoint_pos_centerY field, and the information indicating the z value of the first viewpoint may represent the viewpoint_pos_centerZ field. The information indicating the radius of the sphere for the first viewpoint may represent the viewpoint_radius field.

In addition, the information about the ROI may include information indicating the type of the ROI and information indicating the center point of the ROI. Here, the type of ROI may be derived from circle, square, cylinder, vertex, or 'user defined'. The information indicating the center point of the ROI may include information indicating the x value of the center point of the ROI, information indicating the y value of the center point of the ROI, and information indicating the z value of the center point of the ROI. The information about the ROI may further include information indicating the size of the ROI according to the type of the ROI. The ROI may represent an area for one object included in the 360-degree video for the first viewpoint and the 360-degree video for the second viewpoint. Multiple ROIs for the first viewpoint including the ROI for the first viewpoint and the second viewpoint may be derived, and the metadata may contain information about each of the ROIs. In addition, the metadata may contain information indicating the number of ROIs for the first viewpoint, and a flag indicating whether there is an ROI for multiple viewpoints. The position and/or size of the object represented by the ROI may change over time, and accordingly, the information about the ROI may be periodically updated. Accordingly, the metadata may contain flag information indicating whether the information about the ROI is periodically updated.

Also, the 360-degree video transmission apparatus may generate a hotspot for the first viewpoint. Here, the hotspot for the first viewpoint may represent a link between the first viewpoint and another viewpoint.

The hotspot information may include specific information about the hotspot. For example, when there is a first hotspot for the first viewpoint and the second viewpoint, information about the hotspot may include information indicating a hotspot ID of the first hotspot, information indicating a center point of the first hotspot, and information indicating a hotspot type of the first hotspot. The information indicating the center point of the first hotspot may include information indicating the x value of the center point of the first hotspot, information indicating the y value of the center point of the first hotspot, and information indicating the z value of the center point of the first hotspot. Further, the information about the hotspot may include information indicating a horizontal range of the region for the first hotspot and information indicating a vertical range of the region for the first hotspot.

Here, the hotspot type may be derived as forward, mirror, or jumping. The hotspot type may indicate a configuration type of an orientation of a viewport of the first viewpoint and an orientation of a viewport of the second viewpoint. For example, the forward type may indicate a case where the orientation of the viewport of the second viewpoint is the same as the orientation of the viewport of the first viewpoint. The mirror type may indicate a case where the orientation of the viewport of the second viewpoint is opposite to the orientation of the viewport of the first viewpoint. The jumping type may indicate a case where the orientation of the viewport of the second viewpoint is derived regardless of the orientation of the viewport of the first viewpoint.

Multiple hotspots for the first viewpoint including the first hotspot may be derived. In this case, the metadata may contain information indicating the number of the hotspots for the first viewpoint and information about each of the hotspots. In addition, the metadata may contain information indicating a center point of a viewport for the first viewpoint, information indicating a vertical range of the viewport, and information indicating a horizontal range of the viewport.

The metadata may be transmitted through an SEI message. The metadata may be included in AdaptationSet, Representation, or SubRepresentation of Media Presentation Description (MPD). Here, the SEI message may be used to assist in decoding a 2D image or displaying the 2D image in a 3D space.

The 360-degree video transmission apparatus encodes the pictures (S2040). The 360-degree video transmission apparatus may encode the pictures. In addition, the 360-degree video transmission apparatus may encode the metadata.

The 360-degree video transmission apparatus performs processing for storage or transmission on the encoded pictures and metadata (S2050). The 360-degree video transmission apparatus may encapsulate 360-degree videos for the encoded viewpoints and/or the metadata in the form of a file. The 360-degree video transmission apparatus may encapsulate the encoded 360-degree video data and/or the metadata in a file format such as ISOBMFF or CFF or process the same in a DASH segment so as to store or transmit the same. The 360-degree video transmission apparatus may include the metadata in the file format. For example, the metadata may be included in various levels of boxes on the ISOBMFF file format, or may be included as data in a separate track in the file. The 360-degree video transmission apparatus may encapsulate the metadata as a file. The 360-degree video transmission apparatus may apply processing for transmission to the encapsulated 360-degree video data according to the file format. The 360-degree video transmission apparatus may process the 360-degree video data according to any transmission protocol. The processing for transmission may include processing for delivery over a broadcasting network, or processing for transmission over a communication network such as broadband. In addition, the 360-degree transmission apparatus may apply processing for transmission to the metadata. The 360-degree transmission apparatus may transmit the 360-degree videos and the metadata processed for transmission over a broadcasting network and/or broadband.

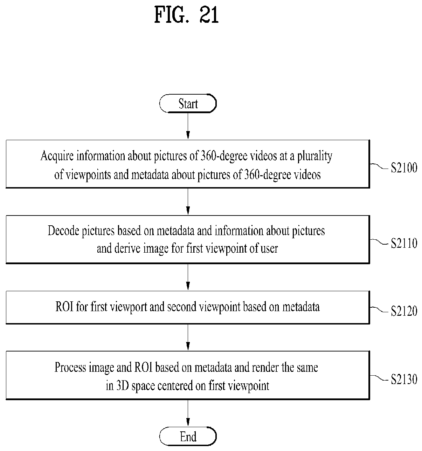

FIG. 21 schematically illustrates a method of processing 360-degree video data by a 360-degree video reception apparatus according to the present disclosure. The method disclosed in FIG. 21 may be performed by the 360-degree video reception apparatus disclosed in FIG. 10. For example, in FIG. 21, S2100 may be performed by the receiver and the reception processor of the 360-degree video reception apparatus, S2110 and S2120 may be performed by the data decoder of the 360-degree video reception apparatus, and S2130 may be performed by the renderer of the 360-degree video reception apparatus.

The 360-degree video reception apparatus acquires information about pictures of 360-degree videos and metadata about the 360-degree videos (S2100).

The 360-degree video reception apparatus may receive, over a broadcast network, the information about the pictures of the 360-degree videos and the metadata signaled from the 360-degree video transmission apparatus. The 360-degree video reception apparatus may receive information about the pictures and the metadata over a communication network such as broadband or a storage medium.

The 360-degree video reception apparatus may process the received information about the pictures and the metadata according to a transmission protocol. In addition, the 360-degree video reception apparatus may perform a reverse process of processing for transmission of the above-described 360-degree video transmission apparatus.

The pictures of the 360-degree videos may represent pictures to which 360-degree video data about multiple viewpoints captured by a camera are mapped.

The metadata may contain a multiview flag field, a num_viewpoint field, a SphereID field, an origin viewpoint_ID field, a viewpoint_ID field, a viewpoint_radius field, a viewpoint_pos_centerX field, a viewpoint_pos_centerY field, a viewpoint_pos_centerZ field, a viewpointCenter_Azimuth field, a viewpointCenter_Elevation field, a viewportCenter_Distance field, a Distance field, a rotation_longitudeX field, a rotation_longitudeY field, a rotation_longitudeZ field, a rotation_latitudeX field, a rotation_latitudeY field, a rotation_latitudeZ field, a rotation_X field, a rotation _Y field, a rotation_Z field, a SharedROI_flag field, a Dynamic_ROIflag field, an ROI_type field, a Center_X field, a Center_Y field, a Center_Z field, a Height_range field, a radius field, a Distance field, a Horizontal_range field, a Vertical_range field, a Vertex_X field, a Vertex_Y field, a Vertex_Z field, an interpolate field, a num_of_DROI field, a DROI_ID field, a DROI_type field, a DROI_centerX field, a DROI_centerY field, a DROI_centerZ field, a DROI_area_horizontal field, a DROI_area_vertical field, a num_of_vertex field, a DROI_X field, a DROI_Y field, a DROI_Z field, a num_of_hotspot field, a hotspot_ID field, a Hotspot Type field, an exposureStartOffset field, an exposureDuration field, a HotspotCenterX field, a HotspotCenterY field, a HotspotCenterZ field, a hotspotCenter_yaw field, a hotspotCenter_pitch field, a hotspotCenter_rollfield, a HotspotRange_Horizontal field, a HotspotRangeVertical field, a next_track_ID field, a next viewpoint_ID field, a Center_interactive_yaw field, a center_interactive_pitch field, a center_interactive roll field, a center_interactive_tilt field, a transfer_rate field, a new_viewport_horizontal field, a new_viewport_vertical field, a static_azimuth_range field, and a static_elevation_range field. The fields have meanings as described above.

Specifically, as an example, the metadata may contain information about a hotspot for the first viewpoint and information about the ROI. In addition, the metadata may contain information about the number of viewpoints, information about the position of the first viewpoint, and information about a viewport of the first viewpoint. In addition, the metadata may contain information indicating the viewpoint ID of a viewpoint that is the origin.

The information about the position of the first viewpoint may include information indicating the viewpoint ID of the first viewpoint, information indicating the x value of the first viewpoint, information indicating the y value of the first viewpoint, and information indicating the z value of the first viewpoint, and/or information indicating the radius of the sphere for the first viewpoint. The sphere may represent a 3D space in which a 360-degree video for the first viewpoint is rendered. The information indicating the viewpoint ID of the first viewpoint may represent the viewpoint_ID field. The information indicating the x value of the first viewpoint may rerpesent the viewpoint_pos_centerX field, the information indicating the y value of the first viewpoint may represent the viewpoint_pos_centerY field, and the information indicating the z value of the first viewpoint may represent the viewpoint_pos_centerZ field. The information indicating the radius of the sphere, which is a 3D space for the first viewpoint, may represent the viewpoint_radius field.

In addition, the information about the ROI may include information indicating the type of the ROI and information indicating the center point of the ROI. Here, the type of ROI may be derived from circle, square, cylinder, vertex, or 'user defined'. The information indicating the center point of the ROI may include information indicating the x value of the center point of the ROI, information indicating the y value of the center point of the ROI, and information indicating the z value of the center point of the ROI. The information about the ROI may further include information indicating the size of the ROI according to the type of the ROI. The ROI may represent an area for one object included in the 360-degree video for the first viewpoint and the 360-degree video for the second viewpoint. Multiple ROIs for the first viewpoint including the ROI for the first viewpoint and the second viewpoint may be derived based on the metadata. In this case, the metadata may contain information indicating the number of ROIs for the first viewpoint and information about each of the ROIs. In addition, the metadata may contain a flag indicating whether an ROI for multiple viewpoints is present. Here, the ROI for the multiple viewpoints may be referred to as a shared ROI.

The position and/or size of the object represented by the ROI may change over time, and accordingly, the information about the ROI may be periodically updated. In this case, the ROI may be referred to as a dynamic ROI. Accordingly, the metadata may contain flag information indicating whether the information about the ROI is periodically updated.

The hotspot information may include specific information about the hotspot. For example, when there is a first hotspot for the first viewpoint and the second viewpoint, information about the hotspot may include information indicating a hotspot ID of the first hotspot, information indicating a center point of the first hotspot, and information indicating a hotspot type of the first hotspot. The information indicating the center point of the first hotspot may include information indicating the x value of the center point of the first hotspot, information indicating the y value of the center point of the first hotspot, and information indicating the z value of the center point of the first hotspot. Further, the information about the hotspot may include information indicating a horizontal range of the region for the first hotspot and information indicating a vertical range of the region for the first hotspot.

Here, the hotspot type may be derived as forward, mirror, or jumping. The hotspot type may indicate a configuration type of an orientation of a viewport of the first viewpoint and an orientation of a viewport of the second viewpoint. For example, the forward type may indicate a case where the orientation of the viewport of the second viewpoint is the same as the orientation of the viewport of the first viewpoint. The mirror type may indicate a case where the orientation of the viewport of the second viewpoint is opposite to the orientation of the viewport of the first viewpoint. The jumping type may indicate a case where the orientation of the viewport of the second viewpoint is derived regardless of the orientation of the viewport of the first viewpoint.

Multiple hotspots for the first viewpoint including the first hotspot may be derived. In this case, the metadata may contain information indicating the number of the hotspots for the first viewpoint and information about each of the hotspots. In addition, the metadata may contain information indicating a center point of a viewport for the first viewpoint, information indicating a vertical range of the viewport, and information indicating a horizontal range of the viewport.

The metadata may be received through an SEI message. The metadata may be included in AdaptationSet, Representation, or SubRepresentation of Media Presentation Description (MPD). Here, the SEI message may be used to assist in decoding a 2D image or displaying the 2D image in a 3D space.

The 360-degree video reception apparatus decodes the pictures based on the metadata and the information about the pictures, and derives an image for a first viewpoint of the user (S2110). The 360-degree video reception apparatus may decode the pictures based on the information about the pictures. The first viewpoint may represent a viewpoint corresponding to the user's location.

The pictures may represent pictures to which 360-degree videos of viewpoints captured by at least one camera are mapped.

The 360-degree video reception apparatus may derive a captured scene for the first viewpoint among the pictures. When the captured scene is derived, the 360-degree video reception apparatus may perform a sphere generation process of generating a 3D space in which the captured scene is to be stitched, based on projection scheme information and sphere radius size information, and the like. The 360-degree video reception apparatus may derive the image based on the captured scene.

As described above, the metadata may contain position information about an initial viewpoint of the 360-degree videos. Here, the initial viewpoint may represent a viewpoint provided first among the 360-degree videos, and the current location of the user when the 360-degree video is initially provided may be derived as a position of the initial viewpoint.

The 360-degree video reception apparatus derives an ROI for the first and second viewpoints based on the metadata (S2120). The ROI may represent an area for one object included in the 360-degree video for the first viewpoint and the 360-degree video for the second viewpoint. The ROI for multiple viewpoints such as the first viewpoint and the second viewpoint may be referred to as a shared ROI. For the ROI for multiple viewpoints, the position and/or size of an object represented by the ROI may change over time, and accordingly, information about the ROI may be periodically updated. In this case, the ROI may be referred to as a dynamic ROI. Accordingly, the metadata may contain flag information indicating whether the information about the ROI is periodically updated. The 360-degree video reception apparatus may derive the position and size of the ROI in the 3D space of the first viewpoint based on the information about the ROI.

The 360-degree video reception apparatus processes the image and the ROI based on the metadata and renders the same in the 3D space centered on the first viewpoint (S2130).

The 360-degree video reception apparatus may map the 360-degree video of the image onto 3D space based on the metadata. In addition, the 360-degree video reception apparatus may map an image in the ROI onto the 3D space based on the metadata. Specifically, the 360-degree video reception apparatus may map 360-degree video data about the image to a 3D model according to a projection scheme. The projection scheme may be derived based on projection scheme information, and the metadata may contain the projection scheme information.

The 360-degree video reception apparatus may derive a viewport in the 3D space based on the metadata, and configure a display screen based on the image included in the viewport. Here, the 360-degree video reception apparatus may configure the display screen including a user interface (UI) for the ROI and/or hotspot.

For example, multiple ROIs for the first viewpoint may be derived based on the metadata. In this case, the display screen may include buttons for the ROIs for the first viewpoint. In addition, when the button for a specific ROI is selected among the buttons for the ROIs by a user, a label or image indicating the specific ROI may be added to the display screen at a position corresponding to the specific ROI within the display screen. In addition, the selected ROI button may be displayed on the display screen in a color different from the color presented before the selection.

The display screen may include a button for an ROI for a viewpoint other than the first viewpoint. In this case, the button for the ROI for the viewpoint other than the first viewpoint may be displayed in a different color from the buttons for the ROIs for the first viewpoint, and may be deactivated. That is, no separate operation may be performed when the button for the ROI for the viewpoint other than the first viewpoint is selected by the user.

Further, multiple hotspots for the first viewpoint including the first hotspot may be derived based on the metadata. In this case, the display screen may contain buttons for the hotspots for the first viewpoint. In addition, when a button for the first hotspot is selected among the buttons for the hotspots by a user, the button for the selected first hotspot may be displayed on the display screen in a color different from the color presented before the selection. Next, the 360-degree video reception apparatus may derive an image for the second viewpoint, process the image based on the metadata, and render the same in a 3D space centered on the second viewpoint. It may derive a viewport in the 3D space based on the metadata, and configure a display screen based on the image included in the viewport.

According to the present disclosure described above, by signaling information related to a hotspot that is a link between viewpoints, a 360-degree video that should be provided according to a user's movement between locations may be transmitted and rendered. Accordingly, 3DoF+ content may be more efficiently provided.

According to the present disclosure, as information about a shared ROI designated for an object included in 360-degree videos of multiple viewpoints is signaled, 3DoF+ content may be more efficiently provided.

**EP 3 780 595 A1**

Further, according to the present disclosure, information about a dynamic ROI designated for an object whose position and shape change over time may be signaled to provide the user with content according to the movement of the object within the ROI. Accordingly, what is intended by a 3DoF+ content producer may be provided more efficiently.

The above-described steps may be omitted or replaced by other steps for performing similar/same operations according to an embodiment.

The 360-degree video transmission apparatus according to an embodiment of the present disclosure may include the data input unit, the stitcher, the signaling processor, the projection processor, the data encoder, the transmission processor, and/or the transmitter described above. Each of the internal components is configured as described above. The 360-degree video transmission apparatus and the internal components thereof according to an embodiment of the present disclosure may perform the above-described embodiments of the method for transmitting a 360-degree video according to the present disclosure.

The 360-degree video reception apparatus according to an embodiment of the present disclosure may include the receiver, the reception processor, the data decoder, the signaling parser, the re-projection processor and/or the renderer described above. Each of the internal components is configured as described above. The 360-degree video reception apparatus and the internal components thereof according to an embodiment of the present disclosure may perform the above-described embodiments of the method of receiving a 360-degree video according to the present disclosure.

The internal components of the above-described apparatuses may be processors that execute successive processes stored in the memory, or may be hardware components composed of other hardware. These components may be arranged inside/outside the device.

The above-described modules may be omitted or replaced by other modules configured to perform similar/same operations according to embodiments.

Each of the above-described parts, modules, or units may be a processor or hardware part that executes successive procedures stored in a memory (or storage unit). Each and of the steps described in the above-described embodiment may be performed by processors or hardware parts. Each module/block/unit described in the above-described embodiment may operate as a hardware element/processor. In addition, the methods described in the present disclosure may be executed as code. The code may be written in a recoding medium readable by a processor, and thus may be read by the processor provided by the apparatus.

While the methods in the above-described embodiment are described based on a flowchart of a series of steps or blocks, the present disclosure is not limited to the order of the steps. Some steps may take place in a different order or simultaneously. It will be understood by those skilled in the art that the steps shown in the flowchart are not exclusive, and other steps may be included or one or more of the steps in the flowchart may be deleted within the scope of the present disclosure.

When embodiments of the present disclosure are implemented in software, the above-described method may be implemented as a module (process, function, etc.) configured to perform the above-described functions. The module may be stored in a memory and may be executed by a processor. The memory may be inside or outside the processor, and may be connected to the processor by various well-known means. The processor may include application-specific integrated circuits (ASICs), other chipsets, logic circuits, and/or data processing devices. The memory may include a read-only memory (ROM), a random access memory (RAM), a flash memory, a memory card, a storage medium, and/or other storage devices.

**Claims**

1. A method for processing 360-degree video data by 360-degree video data receiver, the method comprising:

   obtaining information for pictures of 360-degree video of multiple viewpoints and metadata for the 360-degree video;
   decoding the pictures based on the metadata and information for the pictures and deriving image for a first viewpoint of user;
   deriving ROI(Region of Interest) for the first viewpoint and a second viewpoint based on the metadata;
   rendering 3D space which centers the first viewpoint by processing the image and the ROI based on the metadata, wherein the metadata includes information for hotspot of the first viewpoint and information for the ROI.

2. The method of claim 1,
   wherein the information for the ROI includes information representing a type of the ROI and information representing a center point of the ROI,
   wherein the type of the ROI is derived to circle, sphere or user defined.

48

**3.** The method of claim 2,
wherein the ROI is a region for an object included in 360-degree video for the first viewpoint and 360-degree video for the second viewpoint.

**4.** The method of claim 2,
wherein the information for the ROI is periodically updated,
wherein the ROI which is rendered on the 3D space is updated based on the updated information for the ROI.

**5.** The method of claim 4,
wherein the metadata includes flag information representing whether the information for the ROI is periodically updated.

**6.** The method of claim 1,
wherein the hotspot for the first viewpoint represents a connection between the first viewpoint and other viewpoint.

**7.** The method of claim 6,
wherein when a first hotspot of the first viewpoint and the second viewpoint exists, the information for the hotspot includes information representing a center point of the first hotspot and information representing a hotspot type of the first hotspot.

**8.** The method of claim 7,
wherein the hotspot type of the first hotspot is derived to a forward type, mirror type or jumping type.

**9.** The method of claim 1,
wherein multiple ROIs for the first viewpoint including the ROI of the first viewpoint and the second viewpoint are derived based on the metadata,
wherein the metadata includes information representing a number of the ROIs for the first viewpoint.

**10.** The method of claim 9 wherein the method further comprising:

deriving viewport of the 3D space based on the metadata; and
configuring a display screen based on an image included in the viewport.

**11.** The method of claim 10,
wherein the metadata includes information representing a center point of the viewport, information representing vertical range of the viewport and information representing horizontal range of the viewport.

**12.** The method of claim 10,
wherein the display screen includes buttons of the ROIs for the first viewpoint.

**13.** The method of claim 10,
wherein when a button of specific ROI of the buttons of ROIs is selected by user, a label or a image indicating the specific ROI is added on a position corresponding to the specific ROI in the display screen.

**14.** The method of claim 13,
wherein the button of the specific ROI on the display screen is presented to a color that is different from a color of the button selected before.

**15.** The method of claim 7,
wherein multiple hotspots for the first viewpoints including the first hotspot are derived based on the metadata,
wherein the metadata includes information representing a number of the hotspots for the first viewpoint.

**16.** The method of claim 15, wherein the method further comprising:

deriving viewport of the 3D space based on the metadata; and
configuring a display screen based on an image included in the viewport,
wherein the metadata includes information representing a center point of the viewport, information representing vertical range of the viewport and information representing horizontal range of the viewport,

wherein the display screen includes buttons of the hotspots for the first viewpoint.

17. The method of claim 16,
   wherein when a button of the first hotspot in the buttons of the hotspots is selected by user, the selected button of the first hotspot on the display screen is presented to a color that is different from a color of the button selected before.

18. The method of claim 17, the method comprising:

   deriving image for the second viewpoint when the button of the first hotspot in the buttons of the hotspots is selected by user;
   rendering 3D space which centers the second viewpoint by processing the image and the ROI based on the metadata;
   deriving a viewport of the 3D space based on the metadata; and
   configuring display screen based on an image included in the viewport.

19. The method for processing 360-degree video data by 360-degree video transmitter, the method comprising:

   obtaining 360-degree videos for multiple viewpoints by at least one camera;
   obtaining pictures for the viewpoints by processing the 360-degree videos;
   generating ROI(Region of Interest) for a first viewpoint and a second viewpoint;
   generating metadata for the 360-degree videos;
   encoding the pictures; and
   performing a processing for storage or transmitting for the encoded pictures and the metadata,
   wherein the metadata includes information for a hotspot of the first viewpoint and information for the ROI.

20. The method of claim 19,
   wherein information for the ROI includes information representing a type of the ROI information representing a center point of the ROI, the type of the ROI is derived to circle, sphere or user defined,
   wherein the ROI includes a region for an object included in 360-degree video for the first viewpoint and 360-degree video for the second viewpoint.

## FIG. 1

110

120

130

140

| Capture | Preparation | Delivery | Processing | Rendering |
|---|---|---|---|---|
| Raw data (video, 3D point cloud, 3D model) | Stitching editing, image processing, encoding | Broadcast or unicast transmission | image processing: decoding, upscaling, re-projection | Video display & head-tracking interaction |

**Feedback**

Head orientation for region of interest

EP 3 780 595 A1

## FIG. 2

250

```
aligned(8) class Box(unsigned int(32) boxtype, optional
unsigned int(8)[16] extended_type)
{
    unsigned int(32) size;
    unsigned int(32) type = boxtype;
    if (size==1) {
        unsigned int(64) largesize;
    } else if (size==0) {
    //      box extends to end of file
    }
    if (boxtype=='uuid') {
        unsigned int(8)[16] usertype = extended_type;)
    }
}
```

```
aligned(8) class FullBox(unsigned int(32) boxtype, unsigned int(8)
v, bit(24) f) extends Box(boxtype) {
    unsigned int(8)        version = v;
    bit(24)                flags = f;
}
```

ftyp | moov [ track #1 / track #N | mvex ] | moof | mdat | ⋯ | moof | mdat  ～ 200

ftyp | moov [ track #1 / track #N | mvex ]  ～ 210

ftyp | sidx | moof | mdat | ⋯ | moof | mdat  ～ 220

ftyp | sidx | ssix | moof | mdat | ⋯ | moof | mdat  ～ 230

FIG. 3

# FIG. 4

**HTTP Server** 2200

Media Presentation Description (MPD)

Segment
⋮
Segment

2210

**DASH Client**

DASH Client Conteroller

MPD Parser

Segment Parser

Media Engine

HTTP Clinet

HTTP — 400

**Media Presentation**

Period, start = 0s

Period, start = 100s

Period, start = 195s

⋮

**Period**
Start = 100s
baseURL=http://dash.com/

Adaptation Set 1
Audio

Adaptation Set 2
Video

Adaptation Set 3
Captions

⋮

410

**Representation 1**
bnadwidth = 850kbps
width = 1280, height = 720, ...

Segment Information
Duration = 10s
Template:/video-1-$Number$

**Representation 2**
bnadwidth = 1250kbps
baseURL=http://dash.com/

...

**Representation M**

**Segment Information**

Initialization Segment

http://dash.com/video-1

Media Segment 1
start = 100s
http://dash.com/video-1-1

Media Segment 2
start = 110s
http://dash.com/video-1-2

...

Media Segment 10
start = 190s
http://dash.com/video-1-0

# FIG. 5

viewpoint                viewing position              viewing orientation

(a)                          (b)                          (c)

# FIG. 6

610 620 630 640

**Acquistion**
video/image/
audio/text data

**Pre-processing &
encoding**
stitching, editing,
view segmentation,
projection, packing,
encoding

**Delivery**
Broadcast, unicast
transmission

**Decoding &
post-processing**
unpacking,
Selection,
re-projection

**Rendering &
Composition**
Texture/depth/overlay
composition,
video/audio playback,
& head/position
tracking interaction

**Feedback**
Head/position
orientation for
region of interest

# FIG. 7a

# FIG. 7b

EP 3 780 595 A1

FIG. 8

# FIG. 9

FIG. 10

FIG. 11

$(X-X_0)^2+(Y-Y_0)^2-(Z-Z_0)^2 = r^2$

FIG. 12

$$(X-X_0)^2+(Y-Y_0)^2+(Z-Z_0)^2 = r^2$$

# FIG. 13

$$(X-X_0)^2+(Y-Y_0)^2+(Z-Z_0)^2 = r^2$$

FIG. 14

Compressed video stream → Decoder → Shared ROI Generation → Shared Generation → Shared ROI Orientation Calculation → Image Stitching & Rendering → Display → Hotspot Orientation selection

Head / eye tracking

Orientation / viewport metadata

Share Generation at new viewpoint → Shared ROI Orientation Calculation at new viewpoint → Image Stitching & Rendering

Detailed operation embodiment of hotspot orientation selection

360 Video → Hotspot Duration? — N → Display

Hotspot Duration? — Y → New viewpoint selection? — N → Display

New viewpoint selection? — Y → Recalculate Sphere and ROI

Orientation / viewport metadata

FIG. 15

## FIG. 16

Compressed video stream → Decoder → Shared Generation → Shared ROI Orientation Calculation → Image Stitching & Rendering → Display

Head / eye tracking

Orientation / viewport metadata

Embodiment of receiver operation for 360 video supporting shared ROI in hotspot signaling

Multiview availability
- N
- Y → Rendering (N) ← select New position
- select New position — Y → Check Dynamic ROI (N) → Static ROI → 360 Video → Display → 360 Video
- select New position — N → Check Alignment
  - Check Alignment — N → Axes Alignment
  - Check Alignment — Y → Calculate Viewport offset
- Check Dynamic ROI — N → update Dynamic ROI location
- Axes Alignment → Rendering At new viewposition Without offset
- Calculate Viewport offset → | Offset | > 0
  - | Offset | > 0 — N → Rendering At new viewposition Without offset
  - | Offset | > 0 — Y → Rendering New viewport At new viewposition

Head / eye tracking

360 Video

Detailed operation embodiment of provision of dynamic ROI

FIG. 17

Execute multi-viewpoint 360 video stream/open file

Generation of sphere of initial viewpoint

Play 360 video corresponding to initial viewpoint

Dynamic ROI availability check, connected viewpoint check
Invoking Dynamic ROI and viewpoint ID
Linked location signaling for each dynamic ROI and
viewpoint ID and icon arrangement

Display or activation of label/area and button corresponding to
dynamic ROI ID and viewpoint ID

Selection of some of dynamic ROI IDs by user

Selection of new viewpoint by user

Change color/shape of
button corresponding to selected ID

Change color/shape of
button corresponding to selected ID

Checking alignment, generating sphere of
viewpoint, delivering viewpoint information

Track selected dynamic ROI

Play 360 video at new viewpoint

# FIG. 18

FIG. 19a

FIG. 19b

FIG. 19c

FIG. 19d

FIG. 19e

FIG. 19f

## FIG. 20

```
          ( Start )
              │
              ▼
┌─────────────────────────────────────────────────────────┐
│ Acquire 360 videos for a plurality of viewpoints by at   │ ～ S2000
│ least one camera                                         │
└─────────────────────────────────────────────────────────┘
              │
              ▼
┌─────────────────────────────────────────────────────────┐
│ Process 360-degree videos and acquire pictures for       │ ～ S2010
│ viewpoints                                               │
└─────────────────────────────────────────────────────────┘
              │
              ▼
┌─────────────────────────────────────────────────────────┐
│ Generate ROI for first viewpoint and second viewpoint    │ ～ S2020
└─────────────────────────────────────────────────────────┘
              │
              ▼
┌─────────────────────────────────────────────────────────┐
│ Generate metadata for 360-degree videos                  │ ～ S2030
└─────────────────────────────────────────────────────────┘
              │
              ▼
┌─────────────────────────────────────────────────────────┐
│ Encode pictures                                          │ ～ S2040
└─────────────────────────────────────────────────────────┘
              │
              ▼
┌─────────────────────────────────────────────────────────┐
│ Perform processing for storage or transmission on        │ ～ S2050
│ encoded pictures and metadata                            │
└─────────────────────────────────────────────────────────┘
              │
              ▼
          ( End )
```

FIG. 21

```
                    ( Start )
                        |
                        v
  +------------------------------------------------+
  | Acquire information about pictures of 360-degree videos at a plurality |      ~ S2100
  | of viewpoints and metadata about pictures of 360-degree videos |
  +------------------------------------------------+
                        |
                        v
  +------------------------------------------------+
  | Decode pictures based on metadata and information about pictures |      ~ S2110
  | and derive image for first viewpoint of user |
  +------------------------------------------------+
                        |
                        v
  +------------------------------------------------+
  | ROI for first viewport and second viewpoint based on metadata |      ~ S2120
  +------------------------------------------------+
                        |
                        v
  +------------------------------------------------+
  | Process image and ROI based on metadata and render the same |      ~ S2130
  | in 3D space centered on first viewpoint |
  +------------------------------------------------+
                        |
                        v
                    ( End )
```

## INTERNATIONAL SEARCH REPORT

| International application No. |
|---|
| **PCT/KR2018/008805** |

**A. CLASSIFICATION OF SUBJECT MATTER**

*H04N 13/117(2018.01)i, H04N 13/178(2018.01)i, H04N 13/194(2018.01)i, H04N 13/268(2018.01)i, H04N 21/236(2011.01)i, H04N 21/81(2011.01)i, H04N 21/858(2011.01)i*

According to International Patent Classification (IPC) or to both national classification and IPC

**B. FIELDS SEARCHED**

Minimum documentation searched (classification system followed by classification symbols)

H04N 13/117; G06F 3/01; G06T 19/00; G06T 7/00; H04N 21/4223; H04N 21/435; H04N 5/232; H04N 5/247; H04N 5/44; H04N 13/178; H04N 13/194; H04N 13/268; H04N 21/236; H04N 21/81; H04N 21/858

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: 360, viewpoint, hotspot, interest, area

**C. DOCUMENTS CONSIDERED TO BE RELEVANT**

| Category* | Citation of document, with indication, where appropriate, of the relevant passages | Relevant to claim No. |
|---|---|---|
| Y | US 2018-0041715 A1 (ADTILE TECHNOLOGIES INC.) 08 February 2018 See paragraphs [0011], [0037], [0038], [0039], [0050], [0051], [0059], [0060]; claim 31; and figures 1, 3, 9. | 1-20 |
| Y | KR 10-2016-0059765 A (SAMSUNG ELECTRONICS CO., LTD.) 27 May 2016 See paragraphs [0115], [0124], [0126], [0154]; claim 1; and figures 7b, 9, 10, 15. | 1-20 |
| A | US 2017-0053413 A1 (NOKIA TECHNOLOGIES OY.) 23 February 2017 See paragraphs [0055]-[0067]; claims 1-9; and figures 2A, 2B. | 1-20 |
| A | US 2018-0077345 A1 (CANON KABUSHIKI KAISHA) 15 March 2018 See paragraphs [0106]-[0112]; claims 1-7; and figures 5-8. | 1-20 |
| A | KR 10-2018-0029344 A (SAMSUNG ELECTRONICS CO., LTD.) 21 March 2018 See claims 1-6; and figures 4-6. | 1-20 |

☐ Further documents are listed in the continuation of Box C.    ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 10 JANUARY 2019 (10.01.2019) | **10 JANUARY 2019 (10.01.2019)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2018/008805**

| Patent document cited in search report | Publication date | Patent family member | Publication date |
|---|---|---|---|
| US 2018-0041715 A1 | 08/02/2018 | US 9794495 B1 | 17/10/2017 |
| KR 10-2016-0059765 A | 27/05/2016 | CN 105607882 A<br>EP 3023969 A2<br>EP 3023969 A3<br>US 2016-0142703 A1 | 25/05/2016<br>25/05/2016<br>26/10/2016<br>19/05/2016 |
| US 2017-0053413 A1 | 23/02/2017 | None | |
| US 2018-0077345 A1 | 15/03/2018 | None | |
| KR 10-2018-0029344 A | 21/03/2018 | US 2018-0077451 A1<br>WO 2018-048286 A1 | 15/03/2018<br>15/03/2018 |

Form PCT/ISA/210 (patent family annex) (January 2015)